(19) Europäisches Patentamt
European Patent Office
Office européen des brevets

(11) **EP 2 981 404 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **14715310.0**

(22) Anmeldetag: **04.04.2014**

(51) Int Cl.:
*B29C 48/76* (2019.01)    *B29C 48/405* (2019.01)
*B29C 48/25* (2019.01)    *B29B 7/84* (2006.01)
*B29B 7/48* (2006.01)    *B29B 7/74* (2006.01)
*B29C 48/57* (2019.01)    *B29C 48/50* (2019.01)

(86) Internationale Anmeldenummer:
**PCT/EP2014/056858**

(87) Internationale Veröffentlichungsnummer:
**WO 2014/161997 (09.10.2014 Gazette 2014/41)**

(54) **VERFAHREN ZUR ENTFERNUNG VON FLÜCHTIGEN BESTANDTEILEN AUS ELASTOMERHALTIGEN MEDIEN UND ENTGASUNGSVORRICHTUNG DAFÜR**

METHOD FOR SEPARATION OF VOLATILE COMPONENTS FROM MEDIA CONTAINING ELASTOMERS AND DEGASSING DEVICE FOR THE SAME

PROCÉDÉ D'ÉLIMINATION DE COMPOSANTS VOLATILS À PARTIR DE PRODUITS CONTENANT UN ÉLASTOMÈRE ET DISPOSITIF DE DÉGAZAGE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2013 EP 13001716**

(43) Veröffentlichungstag der Anmeldung:
**10.02.2016 Patentblatt 2016/06**

(73) Patentinhaber: **ARLANXEO Deutschland GmbH**
**41540 Dormagen (DE)**

(72) Erfinder:
• PAUL, Hanns-Ingolf
51375 Leverkusen (DE)
• KIRCHHOFF, Jörg
51061 Köln (DE)
• WIESNER, Udo
53332 Bornheim (DE)
• TIMMERMANS, Luc
B-2940 Stabroek (BE)
• DIELTIENS, Nicolai
B-9000 Gent (BE)

(74) Vertreter: **Kutzenberger Wolff & Partner**
**Waidmarkt 11**
**50676 Köln (DE)**

(56) Entgegenhaltungen:
EP-A1- 2 353 839    EP-A2- 0 160 570
WO-A1-03/020493    WO-A1-2004/009327
WO-A1-2011/006516    WO-A1-2011/116965
DE-A1-102004 010 553    DE-A1-102008 029 305
JP-A- 2003 039 527    US-A- 4 063 717

• BRAVO V L ET AL: "NUMERICAL SIMULATION OF PRESSURE AND VELOCITY PROFILES IN KNEADING ELEMENTS OF A CO-ROTATING TWIN SCREW EXTRUDER", POLYMER ENGINEERING AND SCIENCE, BROOKFIELD CENTER, US, Bd. 40, Nr. 2, 1. Februar 2000 (2000-02-01), Seiten 525-541, XP000926887, ISSN: 0032-3888, DOI: 10.1002/PEN.11184

**Beschreibung**

Die vorliegende Erfindung betrifft ein Verfahren zur Entgasung elastomerhaltiger Medien, wie insbesondere Elastomerlösungen und -dispersionen sowie Entgasungs-vorrichtungen zur Durchführung des vorgenannten Verfahrens.

Extrusion ist ein vielfach angewandtes Verfahren bei der Herstellung, Aufbereitung und Verarbeitung von Polymeren. Unter Extrusion wird hier und im Folgenden die Behandlung eines Mediums in einem Ein- oder Mehrwellenextruder verstanden.

Bei der Herstellung von Polymeren findet die Extrusion industrielle Anwendung zur Entfernung von flüchtigen Bestandteilen wie Monomeren, Oligomeren sowie Hilfs- und Lösungsmitteln aus polymerhaltigen Medien ([1], S. 192 bis 212; [1] = Klemens Kohlgrüber. Twin-Screw Extruders, Hanser Verlag München 2007). Weiterhin kann gegebenenfalls zusätzlich bei der Extrusion eine chemische Modifikation des Polymers wie z.B. durch Pfropfung, Modifikation von funktionellen Gruppen oder Modifikation des Molekulargewichtes durch gezielten Auf- oder Abbau des Molekulargewichts erfolgen oder das Polymer z.B. durch Zumischung von Additiven konfektioniert werden.

Den Vorteilen der Extrusion steht der Nachteil gegenüber, dass insbesondere in den Kammbereichen der typischerweise in den Extrudern als Behandlungselement eingesetzten Schneckenelemente besonders viel Energie in die zu extrudierenden polymerhaltigen Medien dissipiert wird, was lokal zu starken Überhitzungen führen kann. Diese lokalen Überhitzungen können zu Schädigungen im Produkt wie z.B. Veränderung in Geruch, Farbe, chemischer Zusammensetzung oder zur Bildung von Inhomogenitäten im Produkt wie Gelkörpern oder Stippen führen.

Schädigungsmuster diverser Polymere bei lokaler Überhitzung sind beispielsweise dargestellt in WO2009/153000 A auf S. 22, Z. 7 bis S. 24, Z. 25 beschrieben.

Insbesondere Kautschuke wie beispielsweise Polybutadien (BR), Naturkautschuk (NR), Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien- Acrylnitril-Kautschuk (HNBR) sowie Ethylen-Proplyen-Dien-Copolymeren (EPDM) neigen bei zu hoher Temperatur zur Vernetzung und Gelbildung, was zu massiven Verschlechterung von mechanischen Eigenschaften der daraus hergestellten Produkte führt. Bei Chlor- und Brombutylkautschuk sowie Chloroprenkautschuken kann unter erhöhter Temperatur korrosiver Chlor- bzw. Bromwasserstoff freigesetzt werden, der wiederum die weitere Zersetzung des Polymers katalysiert.

Die Reaktionsgeschwindigkeit, mit der eine Polymerschädigung von statten geht, hängt von der Temperatur ab und die Reaktionsgeschwindigkeitskonstante k(T) kann dafür mit dem Arrhenius-Ansatz beschrieben werden:

$$k(T)=A*\exp(-E_A/(R*T)).$$

In dieser Gleichung bedeuten k die Reaktionsgeschwindigkeitskonstante, T die absolute Temperatur in [K], A der Frequenzfaktor, $E_A$ die Aktivierungsenergie in [J/mol] und R die universelle Gaskonstante in [J/(mol*K)].

Verfahren zur Extrusion polymerhaltiger Medien sollten daher auch aus energetischer Sicht generell so ausgestaltet sein, dass der mittlere Temperaturanstieg möglichst gering ausfällt und lokale Temperaturspitzen, wie sie zum Beispiel in den Kammbereichen eines Schneckenelements mit einem klassischen Erdmenger-Schneckenprofil gemäß dem Stand der Technik auftreten, vermieden werden.

Insbesondere für die Entfernung von flüchtigen Bestandteilen aus polymerhaltiger Medien, wie zum Beispiel Lösungsmittelresten oder Wasser, ist es weiterhin vorteilhaft über die Schneckengeometrie ein hohes Maß an Oberflächenerneuerung zu erzielen, die die Entferung flüchtiger Bestandteile begünstigt.

Im Stand der Technik findet sich eine Vielzahl von Lösungsansätzen, die diese Probleme adressieren.

Aus DE 1 180 718 A ist eine Zweiwellen-Schneckenmaschine mit eingängigen Behandlungs- bzw. Schneckenelementen bekannt. Im Querschnitt setzt sich die Außenkontur der Schneckenelemente aus Kreisbögen zusammen. Die in Drehrichtung liegende aktive Flanke weist eine Außenkontur auf, die aus drei Kreisbögen zusammengesetzt ist, deren Mittelpunkte entweder auf dem Außenradius oder auf der Längsachse der Schneckenelemente liegen. Nachteilig ist, dass die Schneckenelemente nur eine geringe Flexibilität bei der Einstellung der auf das zu bearbeitende Material wirkenden Scher- und/oder Dehnströmungen ermöglicht.

Aus WO2009/152968 und WO2011/039016 sind Behandlungselemente für Extruder, wie insbesondere Schneckenelemente, offenbart, die durch ihre abgerundete Form während der Extrusion weniger Energieeintrag in polymerhaltige Medien verursachen.

Aus der EP 1 617 985 A1 ist eine Aufbereitungsanlage sowie ein Verfahren zur Entgasung von bimodalen Polyolefinen bekannt. In der Aufbereitungsanlage sind zwei gleichläufige Zweiwellen-Extruder hintereinander angeordnet, wobei der in Förderrichtung gesehen zweite Extruder eine Entgasungszone zum Entgasen der aufzubereitenden Polyolefine aufweist. Nachteilig bei dieser Aufbereitungsanlage ist, dass die Entgasungsleistung, also die Höhe des entgasten Anteils an unerwünschten flüchtigen Bestandteilen, gering ist.

Aus der EP 0861717 A1 ist ein Verfahren und eine Vorrichtung zur Verarbeitung stark ausgasender Materialien bekannt. Die Extrusionsvorrichtung weist einen Hauptextruder sowie zwei seitlich in diesen mündende Nebenextruder auf, so dass der in einer Verdampfungszone des Hauptextruders entstehende Gasstrom in mindestens drei Teilströme aufgeteilt wird, die dann aus den Extrudern abgeführt werden.

EP 1 127 609 A2 offenbart ein Verfahren zur Entfernung von flüchtigen Bestandteilen aus einem polymerhaltigen Medium unter Verwendung eines Kneters. Dabei wird die Energie teilweise durch die Wand des Kneters eingeleitet und zum Verdampfen des Lösemittels eingesetzt. Weiterhin wird Energie durch die rotierende Welle des Kneters als mechanische Energie zugeführt. Das Einführen von mechanischer Energie über den Kneter hängt stark von der Viskosität des Produkts ab, was die Flexibilität und somit Attraktivität des Verfahrens für industrielle Verfahren stark verringert.

EP 1 165 302 A1 offenbart eine Vorrichtung und ein Verfahren zum Entgasen von Kunststoffen. mit einer Rückwärtsentgasungszone und mehreren Entgasungszonen in Förderrichtung, die unter Vakuum betrieben werden. Das Vakuum ist notwendig, um niedrige Restkonzentrationen an flüchtigen Bestandteilen zu erreichen.

In "Process Machinery", Teil I und II, März und April 2000; Autor: C.G. Hagberg sowie in WO2010/031823 A und PCT/EP2011/054415 wird die direkte Entgasung von Kautschuklösungen unter Verwendung eines Flash-Tanks und eines oder mehrerer Extruder offenbart.

US 4,055,001 offenbart ein Verfahren zur Herstellung von Polymeren wie Butylkautschuk mit einem Wassergehalt von weniger als 0,1 Gew.-% unter Verwendung von Ultraschallsonotroden während des Trocknungsprozesses. Die sehr hohe Scherbelastung durch Ultraschall ist jedoch für den grosstechnischen Einsatz ungünstig.

US 2001/056176 A1 offenbart ein einstufiges Verfahren zur Konzentration von Kautschuklösungen. Die Kautschuklösung wird dabei mit Wasserdampf erwärmt, um vorhandene Lösemittel in einem Schritt durch Entgasen unter Vakuum zu entfernen, wodurch weiße Krümel erzeugt werden. US 2001/056176 A1 erfordert dabei einen großen volumetrischen Dampfstrom zur Entfernung flüchtiger Komponenten bei niederem Dampfdruck und führt zum unerwünschten Einschluss zusätzlichen Wassers in die Krümel. Aus EP 0 764 076A sind Schneckenelemente zur Behandlung von Polymerschmelzen bekannt, die durch unsymmetrische Geometrien im Extruderbetrieb auch bei niedrigeren Temperaturen zur dynamischen Knetung solcher Schmelzen beitragen sollen. Das Dokument JP2003-039527 A offenbart eine Knetvorrichtung, die zumindest eine Dispergierzone aufweist.

Die vorgenannten Lösungsansätze sind jedoch auf die Extrusion von elastomerhaltigen Medien entweder nicht übertragbar oder noch verbesserbar.

Aus PCT/EP2012/069201 sind ein Verfahren zur Entgasung polymerhaltiger Medien, wie insbesondere Polymerschmelzen, Polymerlösungen und -dispersionen sowie Entgasungsvorrichtungen zur Durchführung des vorgenannten Verfahrens bekannt, wobei die Schneckengeometrie bestimmte geometrische Anforderungen erfüllen muss, um ein verbessertes Entgasungsergebnis zu erzielen. Der Erfindung lag nun die Aufgabe zugrunde, ein Verfahren zur Entfernung von flüchtigen Bestandteilen aus elastomerhaltigen Medien bereitzustellen, das eine hohe Entgasungsleistung in Verbindung mit einem hohen Elastomerdurchsatz bei gleichzeitig geringem Restgehalt an flüchtigen Bestandteilen ermöglicht.

Gegenstand der Erfindung ist nun eine Vorrichtung, die zur Entfernung von flüchtigen Verbindungen aus elastomerhaltigen Medien besonders geeignet ist, und zumindest einen Extruder aufweist, der wiederum zumindest aufweist:

- ein Gehäuse und n Gehäusebohrungen $B_n$ mit den dazugehörigen Bohrungsdurchmessern $D_n$ wobei n eine ganze Zahl von 2 bis 16, besonders bevorzugt von 2 bis 12, ganz besonders bevorzugt 2 bis 8 und noch weiter bevorzugt 2 ist und wobei sich die Gehäusebohrungen gegenseitig durchdringen und vorzugsweise parallel angeordnet sind

- n gleichsinnig drehantreibbare Wellen $W_n$, die jeweils in einer der Gehäusebohrungen $B_n$ konzentrisch angeordnet sind, jeweils eine Drehachse $A_n$ aufweisen und jeweils mit zumindest einem Behandlungselement ausgestattet sind, dessen Querschnittsprofil in Umfangsrichtung aufweist

  - m relative Maxima $R^m_{max\ n}$ bezüglich der Radialausdehnung des Querschnittsprofils des Behandlungselementes zur Drehachse $A_n$ der Welle $W_n$, wobei m eine ganze Zahl von 1 bis 16, vorzugsweise 1 bis 8, besonders bevorzugt 1, 2, 3 oder 4, ganz besonders bevorzugt 1, 2 oder 3 und noch weiter bevorzugt 2 oder 3 ist, wobei weiterhin mindestens ein relatives Maximum $R^m_{max\ n}$ ein absolutes Maximum der Radialausdehnung $R_{max\ n}$ bezüglich der Radialausdehnung des Querschnittsprofils des Behandlungselementes zur Drehachse $A_n$ der Welle $W_n$ ist, wobei für $R_{max\ n}$ gilt, dass

$$R_{max\ n} <= (D_n/2)$$

- zumindest eine Zuführzone,

- ein oder mehrere Entgasungszonen umfassend jeweils zumindest eine Entgasungsöffnung, die zum Austrag von flüchtigen Bestandteilen aus einem elastomerhaltigen Medium aus dem Extruder geeignet ist

- zumindest eine Austragszone
wobei der Extruder als Behandlungselemente Schneckenelemente SE aufweist, die so gestaltet sind, dass mindestens folgende Bedingung erfüllt ist:
S1) der freie Abstand $A_{SE}$ zwischen den Profilen der Schneckenelementen zweier drehantreibbarer Wellen, die jeweils in sich gegenseitig durchdringenden benachbarten Gehäusebohrungen $B_n$ und $B_{n+1}$ konzentrisch angeordnet sind, beträgt im Querschnittsprofil bei einer gleichsinnigen Umdrehung der Wellen von 360°

i) von 0,001 bis 0,2 $A_D$, in einer anderen Ausführungsform von 0,005 bis 0,05 $A_D$, wobei $A_D$ der Abstand der Drehachsen der benachbarten zwei drehantreibbaren Wellen ist

ii) und weist zumindest ein absolutes Minimum $A_{minSE}$ und ein absolutes Maximum $A_{maxSE}$ auf, wobei $A_{maxSE} \geq 1,3\ A_{minSE}$, bevorzugt $A_{maxSE} \geq 1,5\ A_{minSE}$, besonders bevorzugt $\geq 5,0\ A_{minSE}$ und besonders bevorzugt $\geq 10,0\ A_{minSE}$ ist und in einer anderen Ausführungsform $A_{maxSE}$ von 1,3 bis 10 $A_{minSE}$, bevorzugt 1,5 bis 8,0 und besonders bevorzugt 1,5 bis 5,0 beträgt.

Dem Fachmann ist klar, dass aufgrund der Bedingung i) $A_{maxSE}$ höchstens 200 $A_{minSE}$ betragen kann.

Vorzugsweise ist auch folgende Bedingung erfüllt:
S2) das Querschnittsprofil der Schneckenelemente weist bezogen auf die Radialausdehnung der Profilkurve zumindest ein absolutes Maximum $R_{max\ n}$ auf, für das gilt:
$0,420\ D_n < R_{max\ n} < 0,496\ D_n$, bevorzugt $0,420\ D_n < R_{max\ n} < 0,490\ D_n$ bevorzugt $0,430\ D_n < R_{max\ n} < 0,485\ D_n$, besonders bevorzugt $0,440\ D_n < R_{max\ n} < 0,482\ D_n$ und ganz besonders bevorzugt $0,450\ D_n < R_{max\ n} < 0,480\ D_n$.

Der Rahmen der Erfindung umfasst neben den explizit angeführten Merkmalen und Merkmalskombinationen auch alle beliebigen Kombinationen von Vorzugsbereichen die für jedes Merkmal spezifiziert sind.

Querschnittsprofil bedeutet im Rahmen der Erfindung das Profil eines Behandlungselementes insbesondere eines Schneckenelementes in einer zur Drehachse $A_n$ der Welle, auf dem das Behandlungselement angeordnet ist, orthogonalen Ebene.

Der Begriff Schneckenelemente umfasst sowohl die heutzutage übliche Modulbauweise aus einer Kernwelle und Schneckenelementen, die eine Aufnahmeöffnung für die Kernwellen besitzen als auch Schnecken in Massivbauweise z.B. in einstückiger Form, Schneckenwellen, die aus einzelnen Teilsegmenten, die in massivbauweise hergestellt sind, bestehen, oder Kombinationen aus den oben genannten Bauweisen.

Gegenseitig durchdringende Gehäusebohrungen sind erfindungsgemäß solche, die zumindest über einen Teilabschnitt des Extruders in Längsausdehnung in ihrer Gesamtheit im Querschnittsprofil einen gemeinsamen Hohlraum bilden.

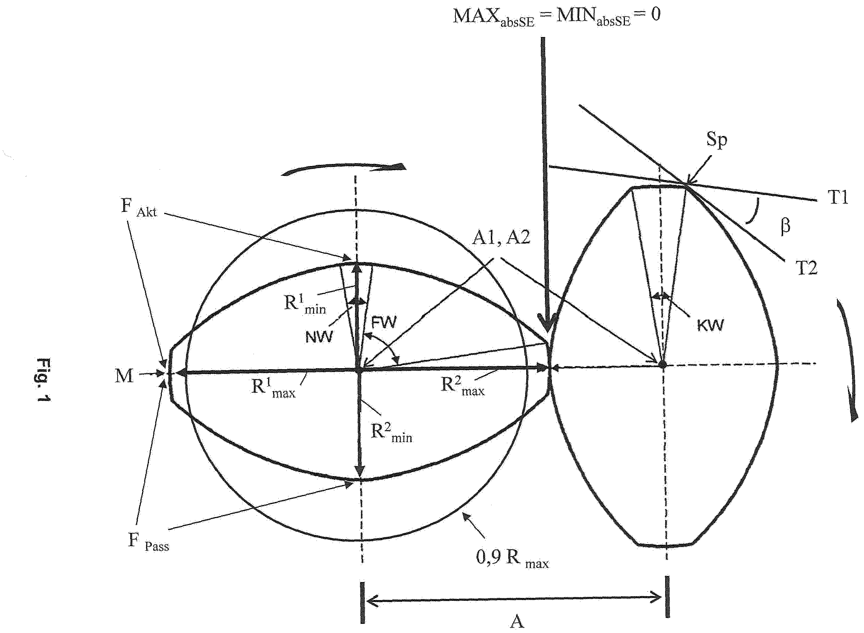

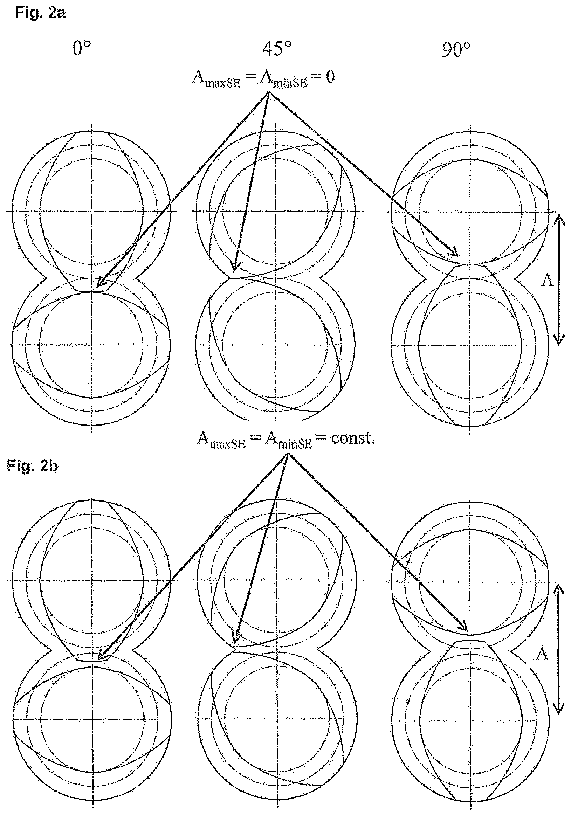

Die obengenannten geometrischen Verhältnisse werden anhand eines klassischen sogenannten zweigängigen Erdmenger-Profils für einen dichtkämmenden Doppelschneckenextruder beschrieben, wie es in Fig. 1, 2a und 2b dargestellt ist. Das Erdmenger-Profil weist beispielsweise zwei relative Maxima $R^1_{max}$ und $R^2_{max}$ im Bereich der Schneckenkämme auf, die auch gleichzeitig jeweils den Maximalwert $R_{max}$ bezüglich der Radialausdehnung des Querschnittsprofils zu den Drehachsen A1 und A2 besitzen.

In der Literatur wie auch hierin werden im Allgemeinen Schneckenelemente, die p relative Maxima $R^p_{max}$ aufweisen, die jeweils mindestens 85 % vorzugsweise mindestens 95% des Maximalwerts $R_{max}$ bezüglich der Radialausdehnung des Querschnittsprofils zur Drehachse $A_n$ der Welle $W_n$ aufweisen, auch als p-gängiges Schneckenprofil bezeichnet.

Die bezogen auf die in Drehrichtung vorn liegenden aktiven Flanken sind im Rahmen dieser Erfindung nun diejenigen Bereiche des Querschnittsprofils der Schneckenelemente von einem relativen Maximum $R^m_{max\ n}$ zum in Drehrichtung liegenden nächsten relativen Minimum $R^m_{min\ n}$ bezüglich der Radialausdehnung des Querschnittsprofils zur Drehachse $A_n$ der Welle $W_n$. Sofern das relative Maximum $R^m_{max\ n}$ oder das relative Minimum $R^m_{min\ n}$ ein einziger Punkt ist, ist dieser definitionsgemäß weder Bestandteil der aktiven Flanke ($F_{akt}$) noch der passiven Flanke $F_{pass}$. Gleiches gilt für den Mittelpunkt M (Mittelpunkt, wie definiert) eines Kammbereiches, der zum Beispiel über einen Kammwinkel KW hinweg bezüglich der Funktion $R(\varphi)$ des Schneckenprofils, wobei $\varphi$ der Winkel in Umlaufrichtung zur Drehachse A1 bzw A2 ist, ein plateauartiges relatives Maximum aufweist. In diesem Fall ist, sowie in Fig. 1 gezeigt, der Bereich zwischen dem Mittelpunkt des plateauartigen Maximums bis zum in Drehrichtung des Schneckenelementes gelegenen Endpunkt des relativen Maximums definitionsgemäß ebenfalls Teil der aktiven Flanke $F_{akt}$. Der Endpunkt des relativen Maximums in Drehrichtung des Schneckenelementes ist im gezeigten Erdmenger-Profil in Fig. 1 der Schnittpunkt Sp.

In Fig. 1 ist weiterhin beispielhaft der Radius 0,9 $R_{max}$ angegeben, womit erkennbar wird, dass sich der Schnittpunkt Sp des Kamm- und des Flankenbogens ausserhalb dieses Radius d.h. zwischen 0,9 $R_{max}$ und $R_{max}$ befindet und im Profil einen Knick erzeugt, der auf dem Schneckenelement eine Kante erzeugt. Ebenfalls in Fig. 1 eingezeichnet sind die Tangenten T1 des Kammbogens und T2 des Flankenbogens, sowie der durch die Tangenten T1 und T2 eingeschlossene kleinere Winkel β, der für das gezeigte Erdmengerprofil etwa 34° beträgt.

Die in Fig. 1 gezeigte Anordnung von Erdmenger-Profilen ist komplett selbstreinigend. Der für die gleichsinnige Umdrehung der Wellen A1 und A2 mit den Winkeln 0°, 45° und 90° in Fig. 2a für diese Anordnung gezeigten freien Abstand $A_{SE}$ ist konstant und beträgt 0, d.h. die Abstände $A_{maxSE}$ und $A_{minSE}$ sind ebenfalls jeweils gleich 0, d.h. das Merkmal S1) ist nicht erfüllt. Die maximale Radialausdehnung des Querschnittsprofils des Behandlungselementes beträgt $R_{max} = (D_n/2) = 29$ mm, d.h. das Merkmal S2), in der Literatur auch als Radialspiel beschrieben, ist ebenfalls nicht erfüllt. Der Abstand der Drehachsen $A_D$ der benachbarten zwei drehantreibbaren Wellen A1 und A2 beträgt hier 48 mm. Dem Fachmann ist bekannt, dass in der Praxis typischerweise ein konstantes Spiel $A_{maxSE}$ von ungleich 0 verwendet wird, um eine mechanische Beschädigung der rotierenden Teile zu vermeiden.

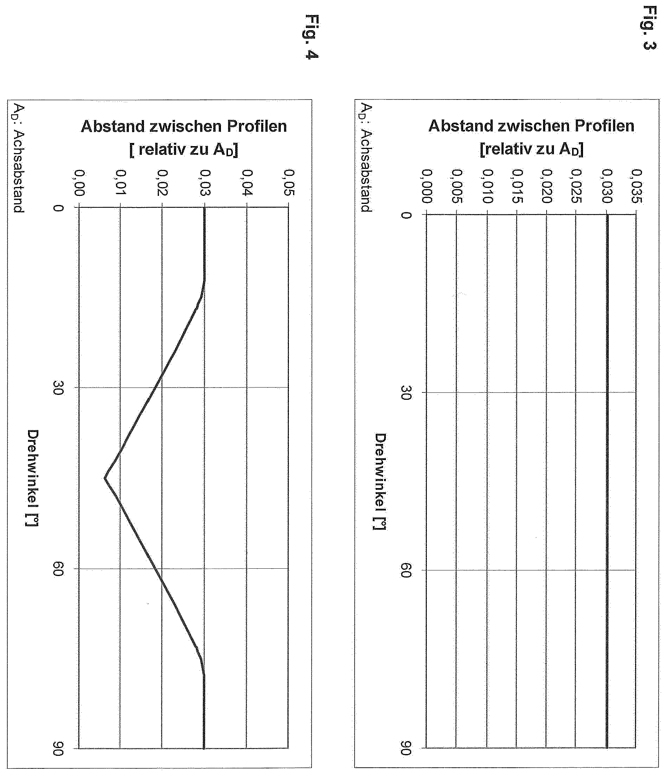

Fig 2b zeigt eine Anordnung von Erdmenger-Profilen wie in Fig. 2a wobei jedoch der Abstand $A_D$ zwischen den Drehachsen A1 und A2 um 1,5 mm auf 49,5 mm vergrößert wurde, um ein Spiel zwischen den Schneckenelementen zu erzeugen. Die maximale Radialausdehnung der Schneckenelemente $R_{max} = (D_n/2)$ beträgt hier ebenfalls 29 mm. Der freie Abstand $A_{SE}$ bleibt bei einer gleichsinnigen Umdrehung der Wellen A1 und A2 von 360° konstant und beträgt im Mittel ca. 0,03 bezogen auf den Achsabstand $A_D$. Der Verlauf des freien Abstands $A_{SE}$ ist in Fig. 3 für einen Drehwinkel von 0 bis 90° wiedergegeben. Aufgrund der Symmetrie der Elemente wiederholt sich der Verlauf für die nächsten Viertelumdrehungen. Auch für die Anordnung gemäß Fig 2a. sind die Merkmale S1) und S2) nicht erfüllt.

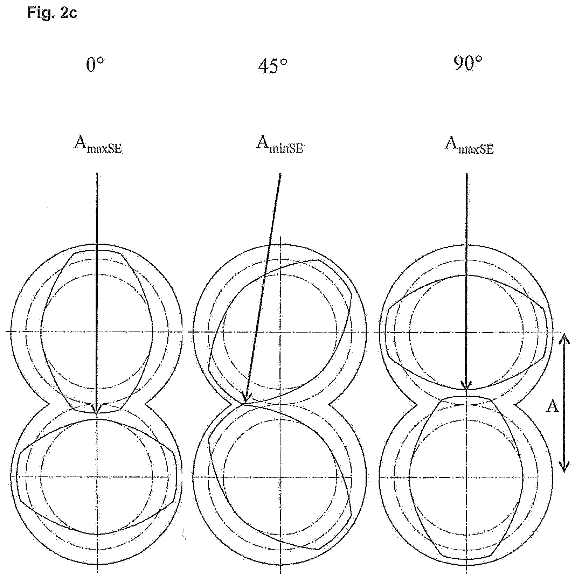

Fig 2c zeigt eine erfindungsgemäße Anordnung von Schneckenprofilen, die aus einem Erdmengerprofil mit vermindertem Kopfdurchmesser erzeugt worden sind. Der Abstand $A_{SE}$ variiert bei einer gleichsinnigen Umdrehung der Wellen A1 und A2 von 360°. Der Verlauf des freies Abstands $A_{SE}$ ist in Fig. 4 für einen Drehwinkel von 0 bis 90° wiedergegeben. Aufgrund der Symmetrie der Elemente wiederholt sich der Verlauf für die nächsten Viertelumdrehungen auch hier. $A_{maxSE}$ beträgt 1,45 mm bzw. 0,03 $A_{D\,D}$ $A_{minSE}$ beträgt 0,31 mm bzw. 0,0064 $A_{D\,D}$. $A_D$ ist 48mm. $A_{maxSE} = 4,7\ A_{minSE}$. Das Merkmal S1) ist folglich erfüllt.

Durch die Verminderung des Kopfdurchmessers wird gleichzeitig ein Radialspiel erzeugt. Die maximale Radialausdehnung der Schneckenelemente beträgt $R_{max} = 0,4743\ D_n$. Das Merkmal S2) ist folglich ebenfalls erfüllt.

Das in Fig. 2c gezeigte Schneckenprofil wird aus dem Standard-Ermenger Profil erzeugt, siehe Konstruktionsvorschrift in [1]. Dazu werden beispielhaft der Aussendurchmesser der Kontur mit 57,8 mm und der Achsabstand mit 47,8 mm angenommen. Mit dieser Angabe werden zunächst die Profile wie in [1] beschrieben als exakt abschabende Kontur erzeugt. Dann wird der Achsabstand auf 48 mm vergrößert (Achsabstand-Vergrößerung). Anschließend wird ein Kreis mit Radius 27,65 mm um die Drehachse des Profils gezoben. Dieser Kreis mit Radius 27,65 mm bildet die neue Aussenflanke des Profils. Das Profil bleibt dabei symmetrisch. Es handelt sich um ein zweigängiges Profil, dementsprechend werden beide Gänge mit dem neuen Aussenradius 27,65 mm erzeugt.

Die geometrische Gestaltungsfreiheit ist innerhalb der Bedingungen S1) und vorzugsweise zusätzlich S2) hoch und dem Fachmann sind Methoden zur Konstruktion von entsprechenden Schneckenelementen und Querschnittsgeometrien um beispielsweise ausgehend von einem vorgegebenen, exakt abschabenden Schneckenprofil Radialspiele und freien Abstände $A_{SE}$ zu konstruieren, hinlänglich bekannt. Bekannte Methoden hierfür sind beispielsweise die in [1] in den Kapiteln 2.5.2 und 5 beschriebenen Möglichkeiten der Achsabstand-Vergrößerung, der Längsschnitt-Äquidistanten und der Raumäquidistanten. Bei der Achsabstand-Vergrößerung wird ein Schneckenprofil mit kleinerem Durchmesser konstruiert und um den Betrag des Spiels zwischen den Schnecken auseinandergerückt. Bei der Methode der Längsschnitt-Äquidistanten wird die Längsschnitt-Profilkurve parallel zur Drehachse des jeweiligen Elements um das halbe Spiel Schneckenelement-Schneckenelement senkrecht zur Profilkurve nach innen, in Richtung zur Drehachse hin, ver¬ schoben. Bei der Methode der Raumäquidistanten wird, ausgehend von der Raumkurve, auf der die Schneckenelemente sich abreinigen, das Schneckenelement in der Richtung senkrecht zu den Flä¬ chen des exakt abschabenden Profils um das halbe Spiel zwischen Schnecke und Schnecke ver¬ kleinert. Bevorzugt werden die Längsschnitt-Äquidistante und die Raumäquidistante, besonders bevorzugt die Raumäquidistante verwendet.

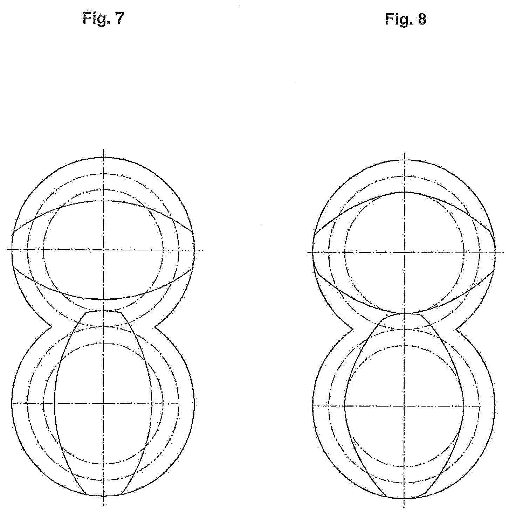

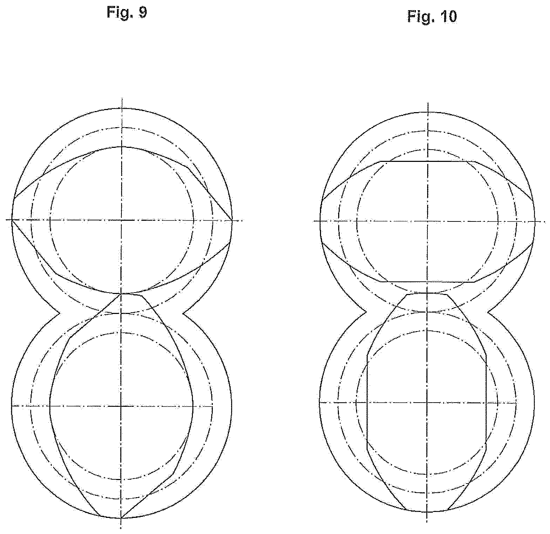

Beispielhaft zeigen Fig. 7 bis 11 ebenfalls erfindungsgemäße Anordnungen von Schneckenprofilen, die wie folgt erzeugt worden sind:

Als Basis diente in allen Fällen die exakt abschabende Kontur gemäß Fig. 1 mit 58 mm Aussendurchmesser und 48 mm Achsabstand A, Die Konstruktion erfolgte wie in [1] beschrieben. Ausgehend davon wurde folgende Modifikationen durchgeführt:

Fig. 7: Ein Kreisbogen mit Radius 46 mm wurde so angelegt, dass die beiden Endpunkte der Kämme des Erdmengerprofils erhalten bleiben. Dadurch ergab sich zwischen Flankengrund und Kamm ein Spiel von 3,6 mm.

Fig. 8: Der Kamm wurde durch einen Kreis mit Radius 13 mm auf einer Seite modifiziert. Der Mittelpunkt dieses Kreises lag auf der Symmetrieachse des Erdmengerprofils. Der Kreis mit Radius 13 mm wurde so angelegt, dass ein glatter Übergang zum übrig bleibenden Kamm des ursprünglichen Erdmengerprofils bestehen blieb.

Fig: 9: Ausgehend vom Mittelpunkt des Kamms des ursprünglichen Erdmengerprofils wurde eine gerade Line unter einem Winkel von 50° zur Symmetrieachse des ursprünglichen Erdmengerprofils gezogen.

Fig. 10: Eine parallele Linie wurde zur Symmetrieachse des ursprünglichen Erdmengerprofils gezogen, und zwar im Abstand von 16 mm zur Symmetrieachse. Dadurch wurde ein Teil des Flankengrundes entfernt, und es entstand ein teilweise größeres Spiel zwischen Kamm und Flankengrund.

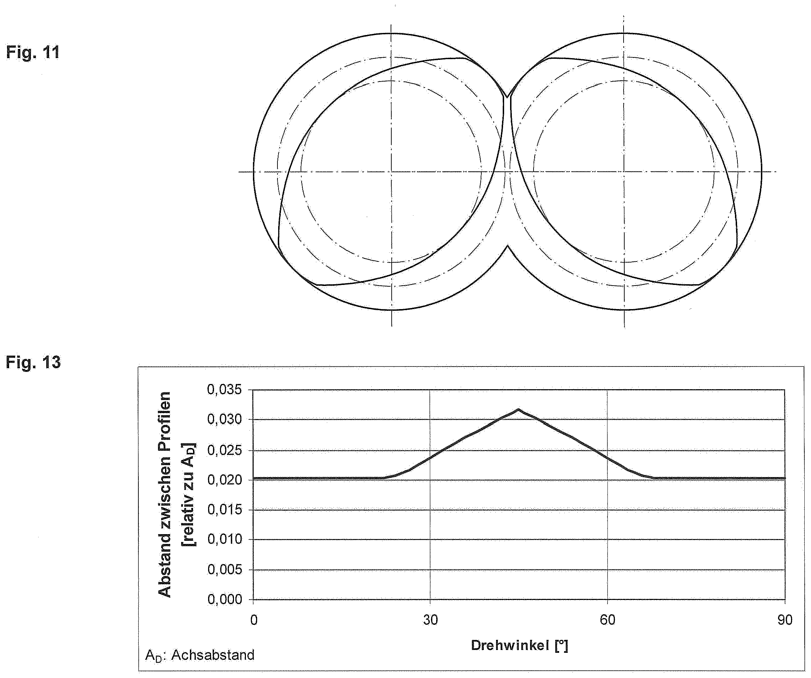

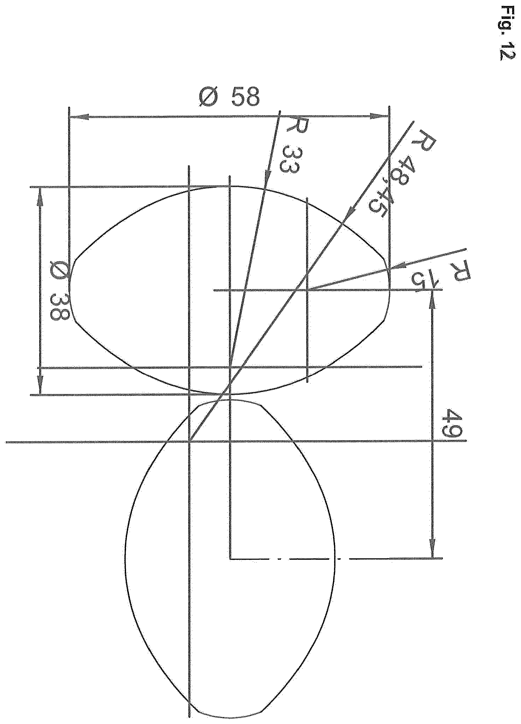

Fig. 11: Das gezeigte Profil weicht vom üblichen Erdmenger-Profil ab. Das zugrunde liegende selbstreinigende Profil wurde für einen Achsabstand von 48mm mit einem Aussendurchmesser von 58mm konstruiert und besteht je Quadrant aus 3 Kreisbögen. Im selbstreinigenden Profil betragen der Fusskreisradius 33 mm, der Flankenradius 48 mm und der Kopfkreisradius 15 mm. Fuss- und Flankenradius gehen tangential ineinander über, zwischen Fuss- und Kopfkreis ergibt sich ein scharfer Knickpunkt. Um eine Variation des Spiels $A_{SE}$ über der Umfangsrichtung zu erreichen, wurde der Mittelpunkt des Flankenkreises um 1 mm verschoben, wodurch sich der Flankenradius auf 48,5mm vergrößerte. Wird zusätzlich der Achsabstand auf 49 mm vergrößert, ergeben sich $A_{mmSE} = 0,02 A_{D\,D}$ und $A_{maxSE} = 0,032 A_D.A_{maxSE} = 1,6 A_{minSE}$ beträgt. Die Konstruktion des Profils ist in Fig. 12 gezeigt. $A_{SE}$ in Abhängigkeit des Drehwinkels ist in Fig. 13 gezeigt.

Erfindungsgemäß können auch Schneckenelemente eingesetzt weren, deren Querschnittsprofil vollständig durch eine stetig differenzierbare Profilkurve darstell¬ bar ist, solange sie das Merkmal S1) vorzugsweise auch das Merkmal S2) erfüllen.

In weiteren Ausführungsformen der Erfindung weist der Extruder ein Gehäuse und n = 2 bis 16, besonders bevorzugt n = 2 bis 12, ganz besonders bevorzugt n= 2 bis 8 und noch weiter bevorzugt n = 2 Gehäusebohrungen $B_n$ auf.

Die Gehäusebohrungen $B_n$ durchdringen sich gegenseitig und sind vorzugsweise parallel angeordnet.

Erfindungsgemäß geeignete Extruderarten umfassend zumindest ein Gehäuse und n Gehäusebohrungen $B_n$ mit den dazugehörigen Bohrungsdurchmessern $D_n$ wobei n eine ganze Zahl von 2 bis 16, besonders bevorzugt von 2 bis 12, ganz besonders bevorzugt 2 bis 8 und noch weiter bevorzugt 2 ist und wobei sich die Gehäusebohrungen gegenseitig durchdringen und vorzugsweise parallel angeordnet sind, sind beispielsweise Doppelwellenextruder, Planetwalzenextruder oder Ringextruder, wobei Doppelwellenextruder oder Ringextruder bevorzugt und Doppelwellenextruder noch weiter bevorzugt sind. Doppelwellenextruder sind erfindungsgemäß gleichsinnig drehantreibbar.

In einer Ausführungsform weist der zumindest eine Extruder weiterhin zumindest eine Dispergierzone auf. In der Dispergierzone können beispielsweise Strippmittel oder andere Additive dem Polymer zugeführt werden. Die Behandlungselemente der Dispergierzone können beispielsweise Knetelemente, Zahnblöcke, Zahnscheiben oder gezahnte Mischelemente sein. Eine mögliche weitere Auswahl an geeigneten Elementen findet sich in [1].

In Bereich der aktiven Flanke eines Schneckenelementes wird das zu extrudierende elastomerhaltige Medium bei Drehung der Extruderwelle $W_n$ in ihrer Gehäusebohrung $B_n$ in einen enger werdenden Keil gepresst. Dabei treten Scher- und Dehnströmungen auf, die insbesondere bei der erfindungsgemäßen Entgasung zu einer hohen Oberflächenerneuerung und damit zu einer verbesserten Diffusion flüchtiger Bestandteile aus dem polymerhaltigen Medium führen.

Es wurde überraschenderweise gefunden, dass die Durchsatz- und Entgasungsleistung von Extrudern signifikant gesteigert werden kann, wenn als Behandlungselemente Schneckenelemente im Extruder vorhanden sind, die das Merkmal S1). vorzugsweise auch S2) erfüllen.

Ohne wissenschaftlich darauf festgelegt werden zu wollen, haben eigene Untersuchungen in einem erfindungsgemäßen Extruder mit transparentem Gehäuse ergeben, dass elastomerhaltige Medien bei zunehmender Entgasung und somit steigender Viskosität strangförmige Gebilde im Extruder ausbilden, die durch den variierenden freien Abstand $A_{SE}$ zwischen benachbarten Schneckenelementen und vorzugsweise zusätzlich einem Radialspiel gemäß S2) zwischen den Schneckenelementen und der Gehäusewand besonders gut durchgewalkt werden. Auf diese Weise wird ein besonders hohes Maß an Oberflächenerneuerung und Entgasung sichergestellt.

Es wurde festgestellt, dass Schneckenelemente, die das Merkmal S1) und vorzugsweise auch S2) erfüllen, den Energieeintrag trotz hoher Entgasungsleistung so gering halten, dass die oben beschriebenen Schädigungen der extrudierten Elastomere weitestgehend oder vollständig vermieden werden können. Dieser Effekt wird insbesondere dann voll genutzt, wenn die Schneckenelemente mit vorgenannten Merkmalen in zumindest einer Entgasungszone eingesetzt werden. Vorzugsweise wird zumindest die letzte Entgasungszone des Extruders mit entsprechenden Schneckenelementen ausgerüstet. In einer weiteren Ausführungsform werden alle Entgasungszonen des Extruders mit entsprechenden Schneckenelementen ausgerüstet. Die Anzahl der Entgasungszonen ist grundsätzlich nicht beschränkt und kann im Extruder beispielsweise 1 bis 20, bevorzugt 1 bis 10 und besonders bevorzugt 2 bis 8 betragen. Die Entgasungszonen liegen typischerweise in der Förderrichtung des Extruders der Zuführzone nachgeschaltet, die Anordnung zumindest einer Entgasungszone, die in der Förderrichtung des Extruders der Zuführzone vorgeschaltet ist (sog. rückwärtige Entgasungszone) ist bevorzugt.

Entgasungszonen umfassen, dies ist dem Fachmann geläufig, typischerweise zumindest eine Entgasungsöffnung im Extrudergehäuse, die in sogenannte Entgasungsdome münden, die wiederum über Gasableitungen mit einer Kondensatoreinheit verbunden sind, in der die aus den polymerhaltigen Medien entweichenden flüchtigen Verbindungen kondensiert werden. Der Druck in den Entgasungszonen bzw. den Entgasungsdomen wird vorzugsweise über Pumpen wie insbesondere Vakuumpumpen geregelt.

Die flüchtigen Verbindungen, die aus dem elastomerhaltigen Medium über die Entgasungsöffnungen und die Entgasungsdöme entweichen, neigen dazu Elastomere bzw Produkte mitzureissen, was im schlimmsten Fall zu einer Verstopfung der Entgasungsöffnungen und der Entgasungsdöme führen kann.

Deshalb sind in einer bevorzugten Ausführungsform der Erfindung die Entgasungsöffnungen und der Entgasungsdöme so gestaltet, dass sie einen Austritt von elastomerhaltigem Medium bzw Produkt wirkungsvoll verhindern oder reduzieren.

Geeignete Mittel zur Erfüllung dieses Zwecks sind ein- oder mehrwellige insbesondere doppelwellige Stopfschnecken, die an den Entgasungsöffnungen montiert sind und in den Extruder fördernd betrieben werden, oder Rollen oder Riemen, die an der Innenseite der Entgasungsöffnungen angeordnet sind, um elastomerhaltigem Medium bzw Produkt zurück in den Extruder zu schieben. Als Alternative oder zusätzlich zu den oben genannten Mitteln können Beschichtungen an den Entgasungsöffnungen eingesetzt werden, die ein Anhaften des Materials an der Oberfläche verringern oder verhindern. Geeignete Beschichtungen sind beispielsweise DLC (diamond-like-carbon), Ethylen-Tetrafluorethylen (ETFE), Polytetrafluorethylen (PTFE) und Nickellegierungen.

Der Druck in den Entgasungsöffnungen und Entgasungsdömen beträgt zum Beispiel zwischen 1 hPa und 2.000 hPa, vorzugsweise zwischen 5 hPa und 900 hPa.

In einer alternativen Ausführungsform werden in den Entgasungszonen Schneckenelemente eingesetzt, die weiterhin folgende Bedingung erfüllen:

S3) Die Schneckenelemente SE weisen eine Steigungshöhe t auf für die gilt:

$1{,}38\,D_n < t < 5{,}00\,D_n$, bevorzugt $1{,}60\,D_n < t < 3{,}00\,D_n$, besonders bevorzugt $1{,}80\,D_n < t < 2{,}50\,D_n$ und ganz besonders bevorzugt $1{,}90\,D_n < t < 2{,}40\,D_n$

Sofern mehrere Entgasungszonen in der Förderrichtung des Extruders der Zuführzone nachgeschaltet sind, ist es erforderlich zwischen den einzelnen Entgasungszonen Druckaufbauzonen und vorzugsweise zusätzlich Stauelemente zwischenzuschalten um die einzelnen Entgasungszonen gegeneinander abzudichten und somit eine fortschreitende Entgasung in der Förderrichtung des Extruders zu ermöglichen. In diesem Fall können die Entgasungszonen bei unterschiedlichen, insbesondere in Förderrichtung des Extruders typischerweise geringer werdenden Drücken betrieben werden.

Während Entgasungszonen typischerweise sogenannte teilgefüllte Zonen mit einem volumimetrischen Füllgrad von etwa 0,1 bis 0,6, vorzugsweise 0,3 bis 0,5 sind, wird in den Druckaufbauzonen und gegebenenfalls am Stauelement ein volumimetrischer Füllgrad von 1 erreicht. Hier spricht man dann von vollgefüllten Zonen oder Abschnitten.

Als Behandlungselemente können in den Druckaufbauzonen beispielsweise übliche, auch nicht erfindungsgemäße Schneckenelemente mit einer geringeren Steighöhe t als in den Entgasungszonen eingesetzt werden.

Als Stauelemente können beispielsweise rückwärts fördernde Elemente, vorwärts fördernde Elemente mit kleiner Steigung, Knetblöcke, Stauscheiben, Zahnmischelemente oder allgemein Elemente mit geringem Fördervolumen eingesetzt werden.

Der Extruder kann beispielsweise auch zumindest eine Dispergierzone aufweisen beispielweise um Strippmittel oder andere Additive in das elastomerhaltige Medium einzubringen. Überaschenderweise wurde gefunden, dass die Dispersion im Extruder besonders gut funktioniert, wenn die zumindest eine Dispergierzone als Behandlungselemente Schneckenelemente aufweist, die so gestaltet sind, dass die folgenden Bedingungen erfüllt sind:

S1) mit den oben genannten Werten einschließlich ihrer Vorzugsbereiche und/oder

S2) mit den oben genannten Werten einschließlich ihrer Vorzugsbereiche und/oder

S4) einer Steigungshöhe t mit $1{,}50\,D_n < t < 12{,}00\,D_n$, bevorzugt $1{,}60\,D_n < t < 10{,}00\,D_n$ und besonders bevorzugt $2{,}00\,D_n < t < 9{,}00$.

Der Einsatz von Schneckenelementen in der Dispergierzone, die die Merkmale S1) und S4) oder S1 und S2) erfüllen sind bevorzugt, der Einsatz von Schneckenelementen in der Dispergierzone, die die Merkmale S1), S2) und S4) erfüllen sind besonders bevorzugt.

Sofern dem elastomerhaltigen Medium Strippmittel zur Förderung der Entgasung zugeführt werden sollen ist es bevorzugt die Dispergierzonen in Förderrichtung des Extruders den Entgasungszonen vorgeschaltet anzuordnen.

In einer Ausführungsform sind den Entgasungszonen in Förderrichtung des Extruders zumindest teilweise Entspannungselemente vorgeschaltet.

Entspannungselemente können beispielsweise rotierende oder feststehende Lochplatten sein.

Solche Lochplatten sind beispielsweise aus JP 59 048136 A, US 3 501 807, DE 34 31 063, DE 623 903 und PCT/EP2011/062636 bekannt.

Als Entspannungselemente können beispielsweise auch rückwärts fördernde Elemente, vorwärts fördernde Elemente mit sehr kleiner Steigung, Knetblöcke oder Stauscheiben eingesetzt werden

In einer bevorzugten Ausführungsform werden feststehende Lochplatten eingesetzt, die mit dem Gehäuse im Betrieb fest verbunden aber entfernbar sind und je eine Aufnahmeöffnung für die Aufnahme jeder im Extruder vorhandenen Welle besitzen und die vorzugsweise wie eine Gleitdichtung für die Wellen dienen. Der Radialabstand s der Aufnahmeöffnung zur Welle beträgt in Relation zum Durchmesser der Gehäusebohrung D vorzugsweise $0,001 \leq s/D \leq 0,02$, vorzugsweise $0.002 \leq s/D \leq 0.01$ und besonders bevorzugt $0.003 \leq s/D \leq 0.006$.

Die Lochplatten weisen eine oder mehrere, vorzugsweise eine Vielzahl von Lochbohrungen auf, wobei die Lochbohrungsdurchmesser einen Durchmesser d von beispielsweise $1 \text{ mm} \leq d \leq 6 \text{ mm}$, vorzugsweise $1.5 \text{ mm} \leq d \leq 5 \text{ mm}$ und besonders bevorzugt $2 \text{ mm} \leq d \leq 4 \text{ mm}$ aufweisen.

In einer ebenfallsbevorzugten Ausführungsform sind die Lochplatten mehrteilig, bevorzugt zweiteilig so ausgestaltet, dass sie aus dem Gehäuse ohne Entfernung der Wellen entnommen werden können.

Der besondere Vorteil des Einsatzes von Lochplatten liegt darin, dass das durch die Lochplatten geführte elastomerhaltige Medium im nachgeordneten Freiraum der Entgasungszone strangförmig ausgebildet ist und eine im Vergleich zum polymerhaltige Medium vor der Düsenplatte größere Oberfläche aufweist. Flüchtige Verbindungen können hierdurch auf einfache Weise aus dem elastomerhaltige Medium austreten und von diesem getrennt werden.

Im Allgemeinen kann der Extruder ein oder mehrere Zuführöffnungen für die Zuführung von Additiven umfassen, die grundsätzlich überall im Extruder positioniert sein können, vorzugsweise ausserhalb der Entgasungszonen und vorzugsweise in den Dispergierzonen, sofern vorhanden.

Beispiele für Zusatzstoffe die über die Zuführöffnungen zugeführt werden können, insbesondere für (Halo)butylkautschukprodukte umfassen Stabilisierungsmittel, Säurefänger, wie ESBO (epoxydisiertes Sojabohnenöl), Stearate wie Kalziumstearate, Antioxidantien und dergleichen. Beispiele für geeignete Antioxidantien enthalten sterisch behinderte Phenole wie Butylhydroxytoluole und deren Derivate wie Irganox 1010 und 1076, Amine, Mercaptobenzimidazole, gewisse Phosphite und dergleichen.

Alternativ oder zusätzlich können die Zusatzstoffe auch bereits dem polymeren Medium PM vor dem Eintritt in die Entgasungsvorrichtung oder, wenn sie flüssig sind, gemeinsam mit dem Strippmittel in den Extruder zugeführt werden.

Die Radialspiele können, wie dem Fachmann bekannt ist, konstant oder, in den angegebenen Grenzen, variabel sein. Es ist auch möglich, innerhalb der Radialspiele ein Schneckenprofil zu verschieben.

Bevorzugte Materialien aus denen Schneckenelemente generell bestehen sind Stähle, insbesondere Nitrierstähle, Chrom-, Werkzeug- und Edelstähle, sowie pulvermetallurgisch hergestellte metallische Verbundwerkstoffe auf Basis von Eisen, Nickel oder Kobalt. Weitere sind Nickel-Basislegierungen sowie nicht-metallische werkstoffe wie Keramiken.

Die erfindungsgemäße Entgasungsvorrichtung kann weiterhin auch dem Extruder vorgeschaltet einen Vorextruder oder einen Vorkneter umfassen, die jeweils als Entgasungsextruder bzw. Entgasungskneter ausgestaltet sind.

Solche Anordnungen sind prinzipiell aus EP 2 353 839 A oder PCT/EP2011/054415 bekannt.

In einer Ausführungsform der Entgasungsvorrichtung kann die den entgasenden Vorextruder oder entgasenden Vorkneter und den (Haupt)Extruder verbindende Übergabezone zumindest ein, vorzugsweise genau ein Entspannungselement wie insbesondere die oben beschriebenen Düsenplatten aufweisen.

In einer weiteren Ausführungsform der Entgasungsvorrichtung kann die den entgasenden Vorextruder oder entgasenden Vorkneter und den (Haupt-) Extruder verbindende Übergabezone zumindest eine Druckregulierungseinheit wie beispielsweise eine Drossel enthalten, mit der dann der Energieeintrag in den Vorextruder oder Vorkneter gesteuert werden kann.

Durch diesen zweistufigen Aufbau der Entgasungsvorrichtung kann eine hohe Entgasungsleistung bei gleichzeitig hohem Durchsatz an elastomerhaltigem Medium erzielt werden.

Sofern ein entgasender Vorextruder eingesetzt wird, wird dessen Drehzahl typischerweise hoch gewählt, da der Energieeintrag durch die (noch) niedrige Viskosität des zu entgasenden polymerhaltigen Mediums gering ist. Der Anteil an flüchtigen Verbindungen kann hierdurch vor der Zuführung in den (Haupt-)Extruder erheblich verringert werden.

Dem entgasenden Vorextruder oder entgasenden Vorkneter kann zur weiteren Erhöhung der Entgasungsleistung ein oder mehrere weitere Konzentratoreinheiten vorgeschaltet sein.

Solche Konzentratoreinheiten können beispielsweise Flash-Verdampfer bzw. Zyklone sein, die aus dem Stand der Technik hinlänglich bekannt sind .

In einer Ausführungsform umfasst eine Konzentrationseinheit zumindest

- eine Heizvorrichtung in Verbindung mit einem Entgasungstank, wobei das Bodenteil des Entgasungstanks mit einer Pumpe in Verbindung steht und das obere Teil des Entgasungstanks mit zumindest einer Gasableitung in Verbindung steht

- eine Heizeinheit in Verbindung mit der Pumpe der Konzentrationseinheit und der Zuführzone des Extruders oder des Vorextruders oder des Vorkneters

Im Zusammenhang mit dieser Erfindung enthält der Begriff "in Verbindung" direkte oder indirekte Verbindungen, wobei indirekte Verbindungen zum Beispiel über Schläuche oder Rohre ausgeführt werden können. Der Begriff "in Verbindung" enthält des Weiteren die Option, dass zwischen den Einheiten oder Mitteln, die in Verbindung stehen, weitere Einheiten oder Mittel angeordnet sind.

Entprechende Konzentratoreinheiten sind aus WO2010/031823 A hinlänglich bekannt.

Weitere Merkmale, Vorteile und Einzelheiten der Erfindung ergeben sich unten aus der Beschreibung der Ausführungsbeispiele.

Die erfindungsgemäße Entgasungsvorrichtung einschließlich ihrer vor- und nachstehend ausgeführten Ausgestaltungsformen ist insbesondere zur Anwendung in einem Verfahren zur Entgasung von elastomerhaltigen Medien geeignet, weshalb ein weiterer Gegenstand der Erfindung ein Verfahren zum Entfernen flüchtiger Verbindungen aus einem elastomerhaltigen Medium (EM) ist, das zumindest ein Elastomer und zumindest eine flüchtige Verbindung enthält, das zumindest die folgenden Schritte umfasst:

a) Zuführen des elastomerhaltigen Mediums (EM) in die erfindungsgemäße Entgasungsvorrichtung wobei diese so betrieben wird, dass flüchtige Verbindungen aus dem elastomerhaltigen Medium (EM) durch die Entgasungsöffnungen der Entgasungseinheit entweichen und so das elastomerhaltige Medium (EM) an flüchtigen Verbindungen verarmt, und bei Austrag aus der Entgasungsvorrichtung das Polymer aus dem elastomerhaltigen Medium als Produkt P gewonnen wird, das dann eine geringeren Anteil an flüchtigen Verbindungen aufweist als das in die Entgasungsvorrichtung zugeführte elastomerhaltige Medium (EM) und vorzugsweise einen Gesamtgehalt von flüchtigen Verbindungen von 1 Gew.-% oder weniger, vorzugsweise 0,5 Gew.-% oder weniger besonders bevorzugt 0,1 Gew.-% oder weniger basierend auf der Masse des Elastomers aufweist.

Elastomerhaltige Medien (EM) sind erfindungsgemäß Medien, die zumindest ein Elastomer und zumindest eine flüchtige Verbindung aufweisen.

Elastomere können natürliche oder synthetische Elastomere sein, vorzugsweise solche mit einem gewichtsmittleren Molekulargewicht von mehr als 2,000 g/mol, besonders bevorzugt mehr als 5,000 g/mol und ganz besonders bevorzugt 20,000 bis 2,000,000 g/mol.

Beispiele für natürliche und synthetische Elastomere umfassen Styrol-Butadien-Kautschuke wie zum Beispiel Lösungs-Styrol-Butadienkautschuk (SSBR) oder Emulsions-Styrol-Butadienkautschuk (ESBR), Naturkautschuke (NR), Butadien-Kautschuke (BR) wie beispielsweise Neodym-butadienkautschuk (NdBR), Lithium-butadienkautschuk (LiBR) und Cobaltbutadienkautschuk (CoBR), Isopren-Kautschuke (IR), Ethylen-Propylen-Dien-Kautschuke wie beispielsweise Ethylenpropylendien (M-Klasse) Kautschuke (EPDM), Ethylen-Propylen-Kautschuke, Nitril-Kautschuke wie beispielsweise Acrylnitril-Butadien-Kautschuke (NBR), hydrierte Nitrilkautschuke (HNBR), Butylkautschuke wie zum Beispiel Isobuten-Isopren-Kautschuk (IIR), Halobutylkautschuke wie beispielsweise Chlorbutylkautschuk (CIIR) und Brombutylkautschuk (BIIR) oder aus Halobutylkautschuken durch Umsetzung mit Aminen oder Phosphinen hergestellte Ionomere, vorzugsweise solche die durch Umsetzung von BIIR mit tertiären Phosphinen erhältlich sind, Chloropren-Kautschuke (CR), Ethylen-Vinylacetat-Kautschuke (EVA und EVM), Polyurethan-Kautschuke, Guttapercha, Fluorkautschuke, Siliconkautschuke, Sulfidkautschuke, Chlorsulfonyl-Polyäthylen-Kautschuke sowie beliebige Mischungen der vorgenannten Elastomere.

Im Zusammenhang mit dieser Erfindung bezeichnet der Begriff Butylkautschuk Copolymere aus Isobuten und mindestens einem weiteren Comonomer, wobei mindestens ein Comonomer konjugierte Doppelbindungen aufweist. Ein bevorzugter Butylkautschuk ist ein Copolymer von Isobuten(2-methylpropen) und Isopren(2-methylbuta-1,3-dien), der auch Isobuten-Isopren-Kautschuk oder kurz IIR genannt wird. Auf einer molaren Basis liegt der Isoprengehalt in dem Polymer von 0,001 und 10 mol-%, vorzugsweise von 0,5 bis 8, und besonders bevorzugt vonl,8 bis 2,3 Mol%. IIR besteht aus linearen Polyisobutenketten mit regellos verteilten Isopreneinheiten. Die Isopreneinheiten führen ungesättigte Stellen in die Polymerkette ein, wodurch eine Vulkanisierung ermöglich wird. Das massengemittelte Molekulargewicht von IIR Mw liegt beispielsweise im Bereich von 50.000 bis 1.000.000 g/mol, vorzugsweise von 300.000 bis 1.000.000 g/mol.

Die halogenierten Butylkautschuke CIIR und BIIR enthalten auch eine gewisse Menge an Halogen, das chemisch an das Polymer gebunden ist. Die Menge an chemisch gebundenem Halogen liegt für gewöhnlich im Bereich von mehr als 0 bis 3 Gew.-% in Bezug auf die Gesamtmasse des Elastomers. Die (Halo)butylkautschuke könnten auch Zusatzstoffe enthalten, z.B. 0,0001 bis 4 phr (phr = Teile pro hundert Teile Kautschuk in Bezug auf das Kautschkgewicht), epoxydiertes Sojabohnenöl (ESBO), 0,0001 bis 5 phr Kalziumstearat und 0,0001 bis 0,5 phr Antioxidantien. Andere Zusatzstoffe sind ebenso anwendbar, abhängig von der Anwendung des Butylkautschuks, d.h. Füllstoffe oder Färbungsmittel.

Im Falle von Brombutylkautschuk BIIR ist der typische Bromgehalt im Fertigprodukt 1,5 bis 2,5 Gew.-%, vorzugsweise 1,6 bis 2,0 Gew.-%.

Im Fall von Chlorbutylkautschuk ist der typische Chlorgehalt im Fertigprodukt 1,0 bis 1,5 Gew.-%, vorzugsweise 1,15 bis 1,35 Gew.-%.

Die erfindungsgemäß einzusetzenden elastomerhaltigen Medien können beispielsweise in Form von Suspensionen, Pasten, Lösungen, stückigen festen Massen, Krümeln (sogenannten "crumbs") oder Mischformen der vorgenannten Erscheinungformen vorliegen.

Im Rahmen dieser Erfindung bedeutet der Begriff "flüchtige Verbindungen" Verbindungen mit einem Siedepunkt unter 250°C bei einem Druck von 1013 hPa. Flüchtige Verbindungen sind insbesondere Wasser und andere flüchtige anorganische Verbindungen sowie flüchtige, organische Verbindungen. Flüchtige organische Verbindungen sind typischerweise Lösungsmittel, die in der Polymerisation oder in anschließenden Verarbeitungsschritten verwendet werden, Monomere oder Oligomere die beispielsweise aus dem Polymerisationsprozess stammen oder andere organische Verbindungen wie beispielsweise Additive.Das elastomerhaltige Medium EM, das auch als Zement bezeichnet wird, enthält beispielsweise 3 bis 98 Gew.-% eines Elastomers und 2 bis 97 Gew.-% flüchtige Verbindungen, insbesondere ein organisches Lösungsmittel oder ein organisches Lösemittel und Wasser, wobei die oben genannten Komponenten bis zu 90 bis 100 Gew.-%, vorzugsweise 95 bis 100 Gew.-% der Gesamtmasse des elastomerhaltigen Mediums ausmachen. Der Rest zu 100 Gew.-% können beispielsweise anorganische oder nicht-elastomere organische Stoffe wie beispielsweise Additive sein.

Das organische Lösungsmittel kann beispielsweise ausgewählt sein aus der Gruppe bestehend aus linearen oder verzweigten Alkanen mit 4 bis 10 C-Atomen, vorzugsweise 4 bis 7 C-Atomen. Bevorzugtere Lösungsmittel sind Lösungsmittel enthaltend oder bestehend aus n-Pentan, isoPentan, n-Hexan, cyclo-Hexan, iso-Hexan, Methyl-cyclopentan, Methylcyclohexan und n-Heptan wie auch beliebige Gemische, die diese Alkane umfassen oder aus diesen bestehen.

In einer Ausführungsform enthält das in den Extruder eingespeiste elastomerhaltige Medium EM, beispielsweise 30 bis 98 Gew.-% eines Elastomers und 2 bis 70 Gew.-% flüchtige Verbindungen, insbesondere organische Lösungsmittel oder organische Lösungsmittel und Wasser, wobei die oben genannten Komponenten zusammen 90 bis 100 Gew.-%, vorzugsweise 95 bis 100 Gew.-% der Gesamtmasse des polymerhaltigen Mediums ausmachen.

Das in den Extruder eingespeiste elastomerhaltige Medium EM enthält bevorzugt 40 bis 95 Gew.-% eines Elastomers und 5 bis 60 Gew.-% flüchtige Verbindungen, insbesondere organische Lösungsmittel oder organische Lösungsmittel und Wasser, wobei die oben genannten Komponenten zusammen 90 bis 100, vorzugsweise 95 bis 100 Gew.-% der Gesamtmasse des elastomerhaltigen Mediums ausmachen.

Sofern die Entgasungseinheit ein dem Extruder vorgeschalteten entgasenden Vorextruder, einen entgasenden Vorkneter oder eine Konzentratoreinheit umfasst, enthält das in den entgasenden Vorextruder, den entgasenden Vorkneter oder die Konzentratoreinheit eingespeiste elastomerhaltige haltige Medium EM beispielsweise 10 bis 95 Gew.-% eines Elastomers und 5 bis 90 Gew.-% flüchtige Verbindungen, bevorzugt 15 bis 80 Gew.-% eines Elastomers und 20 bis 85 Gew.-% flüchtige Verbindungen, und besonders bevorzugt 15 bis 70 Gew.-% eines Elastomers und 30 bis 85 Gew.-% flüchtige Verbindungen, wobei die flüchtigen Verbindungen insbesondere organische Lösungsmittel oder organische Lösungsmittel und Wasser sind, wobei die oben genannten Komponenten zusammen 90 bis 100, vorzugsweise 95 bis 100 Gew.-% der Gesamtmasse des elastomerhaltigen Mediums ausmachen.

Es ist dem Fachmann klar, dass der Gehalt des elastomeren Mediums EM an flüchtigen Verbindungen bei Eintritt in den entgasenden Vorextruder oder den entgasenden Vorkneter geringer ist als bei Eintritt in den nachgeschalteten Extruder. Gleiches gilt analog für den Gehalt des elastomerhaltigen Mediums EM an flüchtigen Verbindungen bei Eintritt in eine Konzentratoreinheit die einem entgasenden Vorextruder oder einem entgasenden Vorkneter vorgeschaltet ist.

In diesem Fall enthält das in die Konzentratoreinheit eingespeiste elastomerhaltige Medium EM vorzugsweise 5 bis 80 Gew.-% eines Elastomers und 20 bis 95 Gew.-% flüchtige Verbindungen, bevorzugt 10 bis 75 Gew.-% eines Elastomers und 25 bis 90 Gew.-% flüchtige Verbindungen, wobei die flüchtigen Verbindungen insbesondere organische Lösungsmittel oder organische Lösungsmittel und Wasser sind, wobei die oben genannten Komponenten zusammen 90 bis 100, vorzugsweise 95 bis 100 Gew.-% der Gesamtmasse des elastomerhaltigen Mediums ausmachen.

In einer Ausführungsform der Erfindung können die Extruder über die Gehäuse entweder auf Temperaturen bis zu 300°C erwärmt oder alternativ dazu gekühlt werden.

In einer bevorzugten Ausführungsform umfasst der Extruder Mittel zum Betreiben getrennter Zonen unabhängig voneinander bei unterschiedlichen Temperaturen, so dass die Zonen entweder erwärmt, nicht erwärmt oder gekühlt werden können.

Bevorzugte Extrudermaterialien sollten nicht korrosiv sein und sollten im Wesentlichen eine Verunreinigung des elastomerhaltige Mediums des Produkts P mit Metall oder Metallionen verhindern.

Bevorzugte Extrudermaterialien enthalten Nitrierstahl, Duplexstahl, rostfreien Stahl, Legierungen auf Nickelbasis, Verbundmaterialien wie gesinterte Metalle, heiße isostatische gepresste Materialien, harte abriebbeständige Materialien wie Stellite, mit Beschichtungen beschichtete Metalle, die zum Beispiel aus Keramik, Titannitrid, Chromnitrid und diamantähnlichem Kohlenstoff (DLC) bestehen.

Die Gasableitungen der Entgasungszonen können an ein Kondensiersystem angeschlossen sein und sind dies vorzugsweise auch.

Im Allgemeinen ist der Zweck des Kondensiersystems das Sammeln flüchtiger Verbindungen, die von den Entgasungsöffnungen über die Gasableitungen entfernt wurden, und es umfasst für gewöhnlich einen Kondensator und eine Vakuumpumpe. Jedes Kondensiersystem, das nach dem Stand der Technik bekannt ist, kann zur Durchführung der Wiedergewinnung von flüchtigen Verbindungen verwendet werden.

Im Allgemeinen ist bevorzugt, die kondensierten flüchtigen Verbindungen, gegebenenfalls nach Durchführung einer Phasentrennung zur Trennung der flüchtigen organischen Verbindungen von Wasser, in einen Prozess für die Zubereitung von elastomerhaltigen Medien zurückzuleiten.

Der Entgasungsvorrichtung nachgeschaltet können Produktverarbeitungsvorrichtungen sein, die vorzugsweise kühlend arbeiten.

Kühlend arbeitende Produktverarbeitungsvorrichtungen umfassen alle dem Fachmann für diese Zweck geläufigen wie beispielsweise pneumatische Krümelförderer mit konvektiver Luftkühlung, vibrierende Krümelförderer mit konvektiver Luftkühlung, vibrierende Krümelförderer mit gekühlten Kontaktflächen, Bandförderer mit konvektiver Luftkühlung, Bandförderer mit gekühlten Bändern, Wassersprühvorrichtungen und Unterwasser-Pelletierer in denen das Wasser als Kühlmittel fungiert.

Das Produkt P kann dann zur Endverpackung und für den Versand weiter verarbeitet werden. (Halo)Butylkautschuk wird zum Beispiel auf eine Temperatur von oder unter 60°C gekühlt, z.B. mit einer hydraulischen Presse zu Bündeln geformt und dann in Schachteln oder Kisten für den Versand verpackt.

Im Allgemeinen erfordert eine erhöhte Beschickungsrate des elastomerhaltigen Mediums EM in die Zuführzone des Extruders eine entsprechende Erhöhung der Drehzahl des Extruders. Ferner bestimmt die Drehzahl die Verweilzeit des elastomerhaltigen Mediums EM. Somit sind Drehzahl, Beschickungsrate und der Extruderdurchmesser für gewöhnlich voneinander abhängig. Für gewöhnlich wird der Extruder derart betrieben, dass der dimensionslose Durchsatz $V/n{*}d^3$ auf etwa 0,01 bis etwa 0,2, vorzugsweise auf etwa 0,015 bis etwa 0,1 eingestellt ist, wobei V die Volumenströmungsrate, n die Drehzahl, ausgedrückt in Umdrehungen pro Minute und d den effektiven Durchmesser des Extruders bezeichnet. Die maximalen und minimalen Beschickungsraten und Drehzahlen werden zum Beispiel durch die Größe des Extruders, die physikalischen Eigenschaften des Elastomers, das im elastomerhaltigen Medium EM enthalten ist, und den Zielwerte der im Elastomers verbleibenden flüchtigen Verbindungen bestimmt. Anhand dieser Eigenschaften können jedoch die Betriebsparameter von einem Fachmann mit Hilfe einiger anfänglicher Experimente bestimmt werden.

In einer Ausführungsform der Erfindung wird der Extruder bei einer Beschickungsrate von 5 bis 25.000, vorzugsweise 5 bis 6.000 Kilogramm pro Stunde betrieben.

Im Allgemeinen kann die Entgasung im Extruder aber auch im Vorextruder oder Vorkneter durch die Zugabe eines Strippmittels unterstützt werden, das gemeinsam mit anderen flüchtigen Verbindungen entfernt wird. Auch wenn das Strippmittels grundsätzlich überall in der Extrudereinheit zugegeben werden kann, ist die Zugabe ausserhalb der Entgasungszonen, z.B. in einer oder mehreren Druckaufbauzonen oder Dispergierzonen bevorzugt.

Geeignete Strippmittel sind Substanzen, die gegenüber dem elastomerhaltigen Medium (EM) inert sind und einen Dampfdruck von mehr als 100 hPa bei 100°C aufweisen.

Im Zusammenhang mit der Erfindung bedeutet der Begriff "inert", dass das Strippmittel mit den Polymeren nicht oder nicht erkennbar chemisch reagiert. Geeignete Strippmittel sind Stickstoff, Kohlendioxid, Edelgase, Propan, Butan, Wasser oder ein Gemisch der oben genannten Substanzen. Die Menge des Strippmittel kann 0,0001 bis 10, vorzugsweise 0,001 bis 5 und bevorzugter 0,1 bis 2 Gew.-% sein, basierend auf der Menge des Elastomers, das an der Austragszone des Extruders erhalten wird.

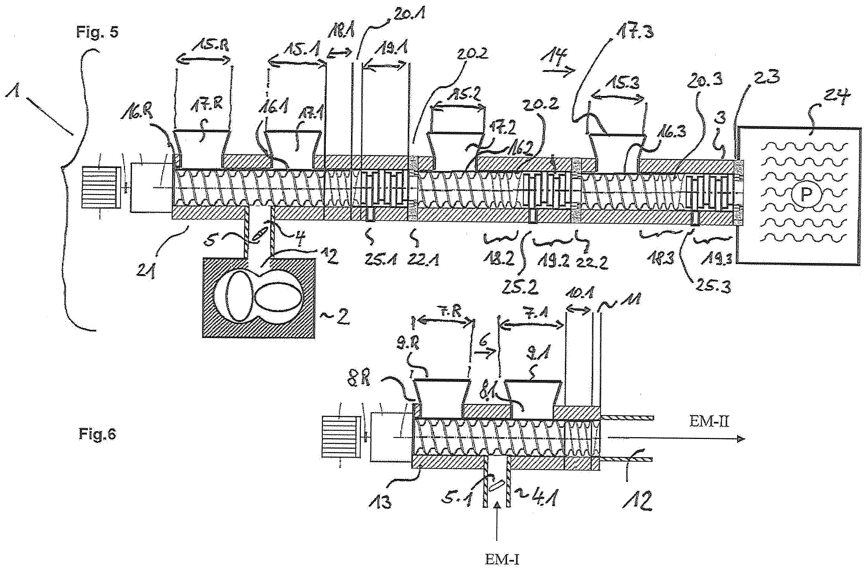

Die Erfindung wird anhand der Beispiele sowie der Figuren 5 und 6 näher erläutert ohne sie jedoch auf diese zu beschränken.

Fig 5 stellt den Extruder einer erfindungsgemäßen Entgasungsvorrichtung im Längsschnitt und den vorgeschalteten Vorextruder im Querschnitt dar.

Fig. 6 zeigt den dem Extruder vorgeschalteten Vorextruder im Längsschnitt

**Beispiele**

**Analytische Verfahren**

Wassergehalt von elastomerhaltigen Medien EM: Die Probe wurde in eine Zentrifuge eingebracht und 5 min bei 4000 U/min bei Raumtemperatur geschleudert. Das Wasser wurde dann am Boden der Ampulle gesammelt und gewogen.

Gesamtkonzentration flüchtiger Verbindungen: Eine Probe des Produktes (P) wurde in kleine Stücke mit einer Größe von 2x2 mm geschnitten. Ungefähr 30 g des Produktes wurde in einen Aluminiumtopf eingebracht. Das Gewicht des Topfes und des Produktes wurde exakt bestimmt. Der Topf mit der Probe des Produktes wurde dann in einen Vakuumofen bei einem Vakuumpegel von 130 hPa für 60 min bei einer Temperatur von 105°C gestellt. Nach dem Trocknen wurde der Topf in einen Exsikkator gestellt und 30 min abkühlen gelassen. Der Topf wurde dann wieder gewogen. Es wurde der Gewichtsverlust bestimmt.

Restlösungsmittelgehalt in Produkt P: Der Restlösungsmittelgehalt im Produkt P wurde durch Dampfraum-Gaschromatographie bestimmt. Eine Einwaage (0,5 ± 0,005 g) der Probe wurde in eine Dampfraumampulle eingebracht und eine gemessene Menge Lösemittel (1,2 Dichlorbenzol, ODCB) zugegeben. Die Ampulle wurde verschlossen und geschüttelt, bis das Produkt aufgelöst war. Die Ampulle wurde erwärmt, bis die flüchtigen organischen Verbindungen bei einem Gleichgewicht zwischen der Probe und der Gasphase in der Ampulle (Dampfraum) verteilt waren. Eine Teilmenge des Dampfraumgases wurde in einen Strom Trägergas eingespritzt, der die Probe entlang einer chromatographischen Säule beförderte. Standards bekannter Zusammensetzung wurden zum Kalibrieren der GC verwendet. Toluol wurde dem Lösemittel zur Verwendung als interner Standard zugegeben.

Restwassergehalt in Produkt P: Die Gesamtmenge an flüchtigen Verbindungen ist die Summe von Wasser, Lösungsmitteln und sonstigen flüchtigen Verbindungen. Da der Anteil von sonstigen flüchtigen Verbindungen wie Monomeren in den untersuchten Fällen üblicherweise geringer als 0,0005 Gew.-%, war, konnte der Restwassergehalt durch Subtrahieren des Lösungsmittelgehaltes vom Gesamtgehalt an flüchtigen Verbindungen bestimmt werden.

Der Lösungsmittelgehalt in den elastomerhaltigen Medien EM wurde mittels Gaschromatographie gemessen. Der interne Standard war Isooctan. Die Probe wurde mit Toluol verdünnt und dann in den Gaschromatographen eingespritzt. Die Gaschromatographie wurde auf einem HP 6890 Chromatographen mit folgenden Spezifikationen durchgeführt:

| | |
|---|---|
| - Säulenart DB-5 von J&W, Länge 60 m, Durchmesser 0,23 mm, Filmdicke | 1,0 $\mu$m |
| - Injektortemp.: | 250°C |
| - Detektortemp.: | 350°C |
| - Trägergas: | Helium |
| - Säulendruck: | 96kPa |
| - Detektor: | FID |

Für die nachstehenden Beispiele wurden folgende elastomerhaltigen Medien EM eingesetzt:

**Zubereitung von EM-I**

Eine rohe Brombutylkautschuklösung wurde von einer kommerziellen Produktionsanlage erhalten, und die organische Phase wurde vom wässerigen Phasenvolumen abgetrennt. Die Trennung der wässrigen von der organischen Phase ist aus WO2010/031823 A, insbesondere Fig. 7 und der Beschreibung dazu bekannt. Die organische Phase wurde dann zur Durchführung der Experimente als EM-I verwendet. EM-I enthielt etwa 23 Gew.-% Brombutylkautschuk, etwa 74 Gew.-% Hexanisomere und 3 Gew.-% Wasser, berechnet auf 100 Gew.-% dieser drei Komponenten. (Die Konzentration der weiteren Zusatzstoffe in Bezug auf die Brombutylkautschukmasse betrug:

ESBO: 1 bis 1,6 phr, Kalziumstearat: 1,3 bis 1,7 phr und Irganox: 0,03 bis 0,1 phr

Das Elastomer sowie die flüchtigen Verbindungen machten somit von 97.55 bis 98.30 Gew.-% der Gesamtmasse des Elastomerhaltigen Mediums aus.

Der Brombutylkautschuk gewonnen aus EM-I, wies nach der Extrusion folgende Eigenschaften auf:
Mooney (ML 1+8, 125°C) 28 bis 36, gebundener Bromgehalt 1,6 bis 2,0 Gew.-%.

**Beispiel 1: Vorkonzentration**

**Die Konzentratoreinheit**

Die Konzentratoreinheit, die für die Beispiele verwendet wurde, war ähnlich jener, die in WO2010/031823 A, insbesondere dort in Fig. 1 dargestellt ist. Eine Zahnradpumpe wurde zum Pumpen des elastomerhaltigen Mediums EM-I, das wie oben beschrieben zubereitet wurde, zur Heizvorrichtung verwendet. Die Heizvorrichtung war ein Wärmetauscher vom Typ Rohr-im-Rohr. Mehrere mit von innen mit Dampf beheizbare Rohre sind dabei in einem Hüllrohr untergebracht, das gleichzeitig das Produkt aufnimmt. Auf der produktberührten Aussenseite der inneren Rohre sind zudem Mischelemente untergebracht, die für einen guten Wärmeübergang sorgen. Das Heizmedium war Dampf, dessen Durchflussmenge je nach eingestellter Temperatur des Mediums geregelt werden konnte. Ein Druckentlastungsventil wurde vor der Konzentratoreinheit installiert, der Druck stromaufwärts des Ventils wurde automatisch auf einen Sollwert gesteuert. Dieser Sollwert wurde so gewählt, dass ein Kochen des erwärmten elastomerhaltigen Medium EM-I in der Heizvorrichtung verhindert wurde. Das erwärmte elastomerhaltige Medium EM-I wurde von oben in den Entgasungstank geleitet. Der konische Auslass des Entgasungsstanks (war mit einer Zahnradpumpe ausgestattet. Die Zahnradpumpe hatte den Vorteil, dass sie imstande war, hohe Viskositäten zu handhaben und hohe Drücke aufzubauen. Proben wurden vom konzentrierten elastomerhaltigen Medium EM-II genommen, um die Konzentration nach der Konzentrationsstufe zu untersuchen.

**Beispiel 1**

Das Heizmedium der Heizvorrichtung wurde auf 160°C eingestellt, so dass das elastomerhaltige Medium EM-I auf eine Temperatur von 135°C aufgewärmt wurde. Der Druck im Entgasungstank war atmosphärisch. Ein atmosphärischer Druck bedeutet, dass die verdampften flüchtigen Bestandteile aus dem Entgasungstank über einen Kondensator geleitet wurden. Der Kondensator wurde mit Wasser gekühlt, die kondensierten flüssigen Bestandteile liefen in ein Auffanggefäß, das direkt mit der Umgebung verbunden war. Dadurch stellte sich im Entgasungstank nahezu Umgebungsdruck ein. Das konzentrierte elastomerhaltige Medium EM-II am Auslass des Entgasungstanks konnte aus der Konzentratoreinheit mit Hilfe der Extraktionspumpe wie oben beschrieben gefördert werden. Das konzentrierte elastomerhaltige Medium EM-II hatte eine Hexankonzentration von etwa 43 Gew.-%.

**Die Entgasungsvorrichtung (1)**

Das vorkonzentrierte EM-II wurde über eine Heizvorrichtung in die Entgasungsvorrichtung (1) geleitet. Die Heizvorrichtung war ein Wärmetauscher von derselben Bauart wie sie auch in der Konzentratoreinheit verwendet wurde. Die Entgasungsvorrichtung bestand aus einem Vorextruder (2), einem gegensinnig drehangetriebenen Doppelschneckenextruder mit einem Bohrungsdurchmesser von D1 = D2 = 57 mm und einer effektiven Länge von 720 mm und einem Hauptextruder (3), einem gleichsinnig drehangetriebenen Doppelschneckenextruder mit einem Bohrungsdurchmesser von D1 = D2 = 58,3 mm und einer effektiven Länge von 3225 mm. Effektive Länge bedeutet in diesem Fall die Länge auf der Produktberührung stattfindet.

Beide Extruder der Entgasungsvorrichtung umfassten ein Regelventil (5 bzw. 5.1) als eine Drucksteuerungsvorrichtung stromaufwärts der jeweiligen Zuführzonen (4 und 4.1) des Extruders bzw. des Vorextruders.

Der Vorextruder wies eine der Zuführzone (4.1) in Förderrichtung des Vorxtruders (6) nachgeordnete Entgasungszone (7.1), und eine der Zuführzone (4.1) in Förderrichtung des Vorextruders (6) vorgeordnete Entgasungszone (7.R) auf. Die Entgasungszone (7.R) wies eine Entgasungsöffnung (8.R) mit Entgasungsdom (9.R) auf, die an eine Gasableitung angeschlossen war, die Entgasungszone (7.1) eine Entgasungsöffnung (8.1) mit Entgasungsdom (9.1), die an eine Gasableitung angeschlossen war. Der Entgasungszone (7.1) in Förderrichtung des Vorextruders (6) nachgeordnet befand sich eine Druckaufbauzone (10.1) und ein Stauelement (11). Nach dem Stauelement (11) führte eine Übergabezone (12) zum Hauptextruder (3). Die Übergabezone (12) bestand aus einem beheizbaren Rohr, das in den Einlass des Regelventils (5) mündete, das wiederum den Beginn der Zuführzone (4) des Hauptextruders (3) markierte.

Die Gasableitungen des Vorextruders (2) waren mit einer Absaug- und Kondensatoreinheit verbunden. Die Absaugung der Gase erfolgte mit einer Vakuumpumpe, von wo aus die verdichteten Gase in einen wassergekühlten Kondensator geleitet wurden. Das Gehäuse (13) des Vorextruders war mit Dampf variabel beheizbar ausgestaltet.

Der Hauptextruder wies drei der Zuführzone (4) in Förderrichtung des Extruders (14) nachgeordnete Entgasungszonen (15.1, 15.2 und 15.3), und eine der Zuführzone (4) in Förderrichtung des Extruders (14) vorgeordnete Entgasungszone (15.R) auf. Die Entgasungszone (15.R) wies eine Entgasungsöffnung (16.R) mit Entgasungsdom (17.R) auf, die an eine Gasableitung angeschlossen war, die Entgasungszonen (15.1, 15.2 und 15.3) jeweils eine Entgasungsöffnung (16.1, 16.2 und 16.3) mit Entgasungsdom (17.1, 17.2 und 17.3), die an jeweils eine Gasableitung angeschlossen war. Die Gasableitungen waren mit einer Kondensatoreinheit bestehend aus einer mechanischen Vakuumpumpe und einem nachgeschalteten wassergekühlten Kondensator angeschlossen. Die Gasableitungen waren mit einer Kondensatoreinheit bestehend aus zwei hintereinander geschalteten mechanischen Vakuumpumpen und einem nachgeschalteten wassergekühlten Kondensator angeschlossen.

Der Entgasungszone (15.1) in Förderrichtung des Extruders (14) nachgeordnet war eine Druckaufbauzone (18.1), und dieser wiederum nachgeordnet eine erste Dispergierzone (19.1).

Den Entgasungszonen (15.2 und 15.3) in Förderrichtung des Extruders (14) nachgeordnet befand sich ebenfalls jeweils eine Druckaufbauzone (18.2 und 18.3). Den Druckaufbauzonen (18.2 und 18.3) wiederum nachgeordnet war jeweils eine Dispersionszone (19.2 und 19.3). Zwischen den Druckaufbauzonen (18.1, 18.2 und 18.3), und den Dispersionszonen (19.1, 19.2 und 19.3), befand sich jeweils ein Stauelement (20.1, 20.2 und 20.3) sowie in Förderrichtung des Extruders (14) den Dispersionszonen (19.1 und 19.2) nachgeordnet jeweils ein im Gehäuse (21) herausnehmbar befestigtes geteiltes Seiherscheibenpaar (22.1 und 22.2).

Der letzten Druckaufbauzone (18.3) in Strömungsrichtung des Extruders (14) nachgeordnet befand sich der Austragszone (23) aus dem Extruder. Dieser Austrag wurde gebildet durch eine feste Düsenplatte, die in eine Unterwassergranulierung (24) mündet. Zwischen der Druckaufbauzone des Extruders (18.3) und der Düsenplatte des Granulators (23) befand sich ein Anfahrventil, das es erlaubt, anstelle der Förderung des Produktes durch die Düsenplatte zum Unterwassergranulator, über einen Bypass das Produkt in ein bereitgestelltes Auffanggefäß zu extrudieren. Dieser Bypass wird vor allem zum An- und Abfahren der Extrusionsvorrichtung verwendet.

Im Bereich der Disperionszonen (19.1, 19.2 und 19.3) wies der Extruder Einlassöffnungen (25.1, 25.2 und 25.3) für die Zuführung von Strippmitteln auf.

Das Gehäuse war mehrteilig und so ausgestaltet, dass es in drei unabhängig voneinander erwärmte oder gekühlte Zonen eingeteilt werden konnte, um das Temperaturprofil im Extruder zumindest teilweise zu steuern. Heizung und Kühlung erfolgte mit Dampf bzw. Kühlwasser.

Die für die Entgasungs-, Druckaufbau- und Dispersionszonen eingesetzten Behandlungselemente und ihre Spezifikation sind in den nachfolgenden Beispielen angegeben.

**Beispiel 2**

Das aus Beispiel 1 erhaltene vorkonzentrierte elastomerhaltige Medium EM-II wurde über eine Heizvorrichtung in die Entgasungsvorrichtung mit einer Rate von 180 kg/h geleitet, resultierend in ca. 80kg/h entgastem trockenem Produkt an der Austragszone (24) der Entgasungsvorrichtung. Die Dampfzufuhr zur Heizvorrichtung wurde dabei so eingestellt, dass die Temperatur von PM-II am Regelventil (5.1) ca. 110°C betrug. Der Druck am Regelventil wurde auf 1,3MPa eingestellt. Der Druck in beiden Zonen des Vorextruders wurde auf 400mbar absolut eingestellt. Die Heiztemperatur in den beheizbaren Teilen des Gehäuses (13) des Vorextruders betrug ca. 160°C. Am Beginn der Übergabezone (4) betrug der Kautschukanteil des weiter aufkonzentrierten elastomerhaltigen Mediums EM-III etwa 80 Gew.-%. EM-III wurde dann bei einer Temperatur von 100°C und einem Druck von ca. 2,0 MPa in den Hauptextruder (3) in der Zuführzone (4) eingeführt. Der Druck an der Übergabezone ergab sich bei komplett geöffneter Drucksteuerungsvorrichtung an der Zuführzone des Hauptextruders.

**Beispiele 3 bis 6**

Das nach Beispiel 1 und Beispiel 2 erhaltene und weiter aufkonzentrierte Produkt EM-III wurde in den Hauptextruder (3) eingeleitet, wobei unterschiedliche Schneckenelemente in den Entgasungs- und Dispergierzonen zum Einsatz kamen.

Die Entgasungszone (15.R) sowie in der Entgasungszone (15.1), wurden bei einem Druck von absolut ca. 100-180 mbar betrieben. Der Druck in den Entgasungszonen (15.2 und 15.3) wurden auf absolut etwa 50 mbar eingestellt. Technisch gesehen ist es schwierig, einen Vakuumdruck in einem solchen Prozess exakt konstant zu halten, daher ergeben sich Schwankungen, die sich im Versuchslauf ausgleichen.

In die Dispergierzone (19.1) die der Entgasungszone (15.1) nachgeordnet ist wurde Stickstoff als Strippmittel mit einer Rate von 0,5 bis 0,6 kg/h eingeleitet.

In die Dispergierzone (19.2) die der Entgasungszone (15.2) nachgeordnet ist wurde eine Dispersion aus Wasser mit Kalziumstearat (45 Gew.% Kalziumstearat) mit einer Rate von 3,6 kg/h eingeleitet.

In die Dispergierzone (19.3) die der Entgasungszone (15.3) nachgeordnet ist wurde eine Dispersion aus Wasser mit Kalziumstearat (45 Gew.-% Kalziumstearat) mit einer Rate von 3,6 kg/h eingeleitet.

Die Drehzahl der Extruderwellen des Hauptextruders betrug zwischen 60 min$^{-1}$ und 90min$^{-1}$.

In Tabelle 2a) sind die in den jeweiligen Beispielen eingesetzten Schneckenelemente zusammengefasst.

**Tabelle 2a) eingesetzte Schneckenelemente**

| Beispiel | Entgasungszonen 15.1, 15.2 und 15.3 |
|---|---|
| 1 | zweigängiges Standard Erdmenger-Profil analogzu Fig. 2b, mit um 0,5 mm vergrößertem Achsabstand A |
| 2 | zweigängiges Basis-Erdmenger-Profil analog zu Fig. 2c, mit um 0,5mm vergrößertem Achsabstand A |
| 3 | zweigängiges Basis-Erdmenger-Profil analog zu Fig. 7, mit um 0,5mm vergrößertem Achsabstand A |

**Tabelle 2b) Radialspiele, freie Abstände $A_{SE}$ und Spaltmaße**

| Beispiel | Entgasungszonen 15.1, 15.2 und 15.3 |
|---|---|
| 1 | $R^1_{max\,n} = R^2_{max\,n} = 0,496\,D_n$, $A_{minSE} - 0,25\,mm$, $A_{maxSE} = 0,25\,mm$ |
| 2 | $R^1_{max\,n} = R^2_{max\,n} = 0,463\,Dn$, $A_{minSE} = 0,25\,mm$, $A_{maxSE} = 2.06\,mm$ |
| 3 | $R^1_{max\,n} = R^2_{max\,n} = 0,496\,Dn$, $A_{minSE} = 0,25\,mm$, $A_{maxSE} = 2.6\,mm$ |

**Tabelle 2c) Ergebnisse**

| Beispiel | Hexan-Gehalt im Produkt P [Gew.-ppm] | Gesamte flüchtige Stoffe incl. Wasser [Gew.-%] |
|---|---|---|
| 1 (zum Vergleich) | 2900 | <0,30 |
| 2 | 440 | <0,30 |
| 3 | 450 | <0,30 |

Aus den Beispielen wird Folgendes ersichtlich:
Im Beispiel 1 ist nur die Bedingung S2), nicht aber S1) erfüllt, das Entgasungsergebnis ist unbefriedigend.
In den Beispielen 2 und 3 sind die Bedingungen S1) und S2) erfüllt, das Entgasungsergebnis ist sehr gut.

**Patentansprüche**

1. Entgasungsvorrichtung umfassend zumindest einen Extruder, der zumindest aufweist:

• ein Gehäuse und n Gehäusebohrungen $B_n$ mit den dazugehörigen Bohrungsdurchmessern $D_n$ wobei n eine ganze Zahl von 2 bis 16, besonders bevorzugt von 2 bis 12, ganz besonders bevorzugt 2 bis 8 und noch weiter bevorzugt 2 ist und wobei sich die Gehäusebohrungen gegenseitig durchdringen und vorzugsweise parallel angeordnet sind
• n vorzugsweise gleichsinnig drehantreibbare Wellen $W_n$, die jeweils in einer der Gehäusebohrungen $B_n$ konzentrisch angeordnet sind, jeweils eine Drehachse $A_n$ aufweisen und jeweils mit zumindest einem Behandlungselement ausgestattet sind, dessen Querschnittsprofil in Umfangsrichtung aufweist

- m relative Maxima $R^m_{max\,n}$ bezüglich der Radialausdehnung des Querschnittsprofils des Behandlungselementes zur Drehachse $A_n$ der Welle $W_n$, wobei m eine ganze Zahl von 1 bis 16, vorzugsweise 1 bis 8, besonders bevorzugt 1, 2, 3 oder 4, ganz besonders bevorzugt 1, 2 oder 3 und noch weiter bevorzugt 2 oder 3 ist, wobei weiterhin mindestens ein relatives Maximum $R^m_{max\,n}$ ein absolutes Maximum der Radialausdehnung $R_{max\,n}$ bezüglich der Radialausdehnung des Querschnittsprofils des Behandlungselementes zur Drehachse $A_n$ der Welle $W_n$ ist, wobei für $R_{max\,n}$ gilt, dass

$$R_{max\,n} <= (D_n/2)$$

• zumindest eine Zuführzone,
• ein oder mehrere Entgasungszonen umfassend jeweils zumindest eine Entgasungsöffnung, die zum Austrag von flüchtigen Bestandteilen aus einem elastomerhaltigen Medium aus dem Extruder geeignet ist
• zumindest eine Austragszone
wobei der Extruder als Behandlungselemente Schneckenelemente SE aufweist, die so gestaltet sind, dass mindestens folgende Bedingung erfüllt ist:
S1) der freie Abstand $A_{SE}$ zwischen den Profilen der Schneckenelementen zweier drehantreibbarer Wellen, die jeweils in sich gegenseitig durchdringenden benachbarten Gehäusebohrungen $B_n$ und $B_{n+1}$ konzentrisch angeordnet sind, beträgt im Querschnittsprofil bei einer gleichsinnigen Umdrehung der Wellen von 360°

i) von 0,001 bis 0,2 $A_D$, wobei $A_D$ der Abstand der Drehachsen der benachbarten zwei drehantreibbaren Wellen ist

ii) und weist zumindest ein absolutes Minimum $A_{minSE}$ und ein absolutes Maximum $A_{maxSE}$ auf, wobei $A_{maxSE} \geq 1{,}5\ A_{minSE}$, bevorzugt $\geq 5{,}0\ A_{minSE}$ und besonders bevorzugt $\geq 10{,}0\ A_{minSE}$ ist.

2. Entgasungsvorrichtung nach Anspruch 1, **dadurch gekennzeichnet, dass** die Schneckenelementen SE weiterhin folgende Bedingung erfüllen:

S2) das Querschnittsprofil der Schneckenelemente weist bezogen auf die Radialausdehnung der Profilkurve zumindest ein absolutes Maximum $R_{max\ n}$ auf, für das gilt:

$0{,}420\ D_n < R_{max\ n} < 0{,}496\ D_n$, bevorzugt $0{,}420\ D_n < R_{max\ n} < 0{,}490\ D_n$ bevorzugt $0{,}430\ D_n < R_{max\ n} < 0{,}485\ D_n$, besonders bevorzugt $0{,}440\ D_n < R_{max\ n} < 0{,}482\ D_n$ und ganz besonders bevorzugt $0{,}450\ D_n < R_{max\ n} < 0{,}480\ D_n$.

3. Entgasungsvorrichtung nach Anspruch 1 oder 2, **dadurch gekennzeichnet, dass** als Extruder Doppelwellenextruder, Planetwalzenextruder oder Ringextruder, bevorzugt Doppelwellenextruder oder Ringextruder, ganz besonders bevorzugt Doppelwellenextruder eingesetzt werden.

4. Entgasungsvorrichtung nach einem der Ansprüche 1 bis 3, **dadurch gekennzeichnet, dass** die in Förderrichtung des Extruders (14) letzte Entgasungszone des Extruders, vorzugsweise alle Entgasungszonen mit Schneckenelementen SE ausgerüstet sind.

5. Entgasungsvorrichtung nach einem der Ansprüche 1 bis 4, **dadurch gekennzeichnet, dass** die Entgasungsöffnungen (16) und die Entgasungsdöme (17) so gestaltet sind, dass sie einen Austritt von elastomerhaltigem Medium wirkungsvoll verhindern oder reduzieren und insbesondere ein- oder mehrwellige, insbesondere doppelwellige Stopfschnecken, die an den Entgasungsöffnungen montiert sind und in den Extruder fördernd betrieben werden, aufweisen oder Rollen oder Riemen, die an der Innenseite der Entgasungsöffnungen angeordnet sind, um elastomerhaltiges Medium bzw Produkt zurück in den Extruder zu schieben.

6. Entgasungsvorrichtung nach einem der Ansprüche 1 bis 5, **dadurch gekennzeichnet, dass** die Schneckenelemente SE unsymmetrisch oder symmetrisch sind.

7. Verfahren zum Entfernen flüchtiger Verbindungen aus einem elastomerhaltigen Medium (EM), das zumindest ein Elastomer und zumindest eine fluchtige Verbindung enthält, das zumindest den folgenden Schritt umfasst:

Zuführen des elastomerhaltigen Mediums (EM) in eine Entgasungsvorrichtung gemäß einem der Ansprüche 1 bis 6, wobei diese so betrieben wird, dass flüchtige Verbindungen aus dem elastomerhaltigen Medium (EM) durch die Entgasungsöffnungen der Entgasungseinheit entweichen und so das elastomerhaltige Medium (EM) an flüchtigen Verbindungen verarmt, und bei Austrag aus der Entgasungsvorrichtung das Polymer aus dem elastomerhaltigen Medium als Produkt P gewonnen wird, das dann eine geringeren Anteil an flüchtigen Verbindungen aufweist als das in die Entgasungsvorrichtung zugeführte elastomerhaltige Medium (EM) und vorzugsweise einen Gesamtgehalt von flüchtigen Verbindungen von 1 Gew.-% oder weniger, vorzugsweise 0,5 Gew.-% oder weniger besonders bevorzugt 0,1 Gew.-% oder weniger basierend auf der Masse des Elastomers aufweist.

8. Verfahren nach Anspruch 7, **dadurch gekennzeichnet, dass** das elastomerhaltige Medium (EM) zumindest ein natürliches oder synthetisches Elastomer enthält, das vorzugsweise ein gewichtsmittleres Molekulargewicht von mehr als 2,000 g/mol, besonders bevorzugt mehr als 5,000 g/mol und ganz besonders bevorzugt 20,000 bis 2,000,000 g/mol aufweist.

9. Verfahren nach Anspruch 7 oder 8, **dadurch gekennzeichnet, dass** das elastomerhaltige Medium (EM) Styrol-Butadien-Kautschuke wie zum Beispiel Lösungs-Styrol-Butadienkautschuk (SSBR) oder Emulsions-Styrol-Butadienkautschuk (ESBR), Naturkautschuke (NR), Butadien-Kautschuke (BR) wie beispielsweise Neodym-butadienkautschuk (NdBR), Lithium-butadienkautschuk (LiBR) und Cobaltbutadienkautschuk (CoBR), Isopren-Kautschuke (IR), Ethylen-Propylen-Dien-Kautschuke wie beispielsweise Ethylenpropylendien (M-Klasse) Kautschuke (EPDM), Ethylen-Propylen-Kautschuke, Nitril-Kautschuke wie beispielsweise Acrylnitril-Butadien-Kautschuke (NBR), hydrierte Nitrilkautschuke (HNBR), Butylkautschuke wie zum Beispiel Isobuten-Isopren-Kautschuk (HR), Halobutylkautschuke wie beispielsweise Chlorbutylkautschuk (CIIR) und Brombutylkautschuk (BIIR) oder aus Halobutylkautschuken durch Umsetzung mit Aminen oder Phosphinen hergestellte Ionomere, vorzugsweise solche die durch Umsetzung von BIIR mit tertiären Phosphinen erhältlich sind, Chloropren-Kautschuke (CR), Ethylen-Vinylacetat-Kautschuke (EVA und EVM), Polyurethan-Kautschuke, Guttapercha, Fluorkautschuke, Siliconkautschuke, Sulfidkautschuke, Chlorsulfonyl-Polyäthylen-Kautschuke sowie beliebige Mischungen der vorgenannten Elastomere eingesetzt werden.

10. Verfahren nach einem der Ansprüche 7 bis 9, **dadurch gekennzeichnet dass** das elastomerhaltige Medium (EM) Butylkautschuk und/oder halogenierte Butylkautschuke enthält.

11. Verfahren nach einem der Ansprüche 7 bis 10, **dadurch gekennzeichnet dass** das elastomerhaltige Medium (EM) in Form von Suspensionen, Pasten, Schmelzen, Lösungen, stückigen festen Massen oder Mischformen der vorgenannten Erscheinungformen vorliegt.

12. Verfahren nach einem der Ansprüche 7 bis 11, **dadurch gekennzeichnet dass** das elastomerhaltige Medium (EM) 3 bis 98 Gew.-% eines Elastomers und 2 bis 97 Gew.-% flüchtige Verbindungen, insbesondere ein organisches Lösungsmittel oder ein organisches Lösemittel und Wasser enthält, wobei die oben genannten Komponenten bis zu 90 bis 100 Gew.-%, vorzugsweise 95 bis 100 Gew.-% der Gesamtmasse des elastomerhaltigen Mediums (EM) ausmachen.

13. Verfahren nach einem der Ansprüche 7 bis 12, **dadurch gekennzeichnet dass** der Druck in den Entgasungsöffnungen (16) und Entgasungsdömen (17) zwischen 1 hPa und 2.000 hPa beträgt.

14. Verfahren nach einem der Ansprüche 7 bis 13, **dadurch gekennzeichnet dass** dem Extruder der Entgasungsvorrichtung oder dem Vorextruder oder Vorkneter Strippmittel zugeführt werden.

15. Verwendung einer Entgasungsvorrichtung nach einem der Ansprüche 1 bis 6, die als Behandlungselemente Schneckenelemente SE aufweist, die so gestaltet sind, dass mindestens folgende Bedingung erfüllt ist:
S1) der freie Abstand $A_{SE}$ zwischen den Profilen der Schneckenelementen zweier drehantreibbarer Wellen, die jeweils in sich gegenseitig durchdringenden benachbarten Gehäusebohrungen $B_n$ und $B_{n+1}$ konzentrisch angeordnet sind, beträgt im Querschnittsprofil bei einer gleichsinnigen Umdrehung der Wellen von 360°

i) von 0,001 bis 0,2 $A_D$, wobei $A_D$ der Abstand der Drehachsen der benachbarten zwei drehantreibbaren Wellen ist
ii) und weist zumindest ein absolutes Minimum $A_{minSE}$ und ein absolutes Maximum $A_{maxSE}$ auf, wobei $A_{maxSE} \geq 1,5\ A_{minSE}$, bevorzugt $\geq 5,0\ A_{minSE}$ und besonders bevorzugt $\geq 10,0\ A_{minSE}$ ist

zur Entgasung von elastomerhaltigen Medien.

**Claims**

1. Devolatilisation apparatus comprising at least one extruder which has at least:

• a barrel and n barrel holes $B_n$ having the associated hole diameters $D_n$ where n is an integer from 2 to 16, particularly preferably from 2 to 12, very particularly preferably from 2 to 8 and even more preferably 2, and the barrel holes pass through opposite one another and are preferably arranged parallel to one another,
• n screws $W_n$ which preferably can be driven so as to rotate in the same direction and are in each case arranged concentrically in one of the barrel holes $B_n$, in each case have an axis of rotation $A_n$ and in each case are equipped with at least one treatment element whose cross-sectional profile in the circumferential direction has

- m relative maxima $R^m_{max\ n}$ in respect of the radial dimension of the cross-sectional profile of the treatment element to the axis of rotation $A_n$ of the screw $W_n$, where m is an integer from 1 to 16, preferably from 1 to 8, particularly preferably 1, 2, 3 or 4, very particularly preferably 1, 2 or 3 and even more preferably 2 or 3, where, furthermore, at least one relative maximum $R^m_{max\ n}$ is an absolute maximum of the radial dimension $R_{max\ n}$ in respect of the radial dimension of the cross-sectional profile of the treatment element to the axis of rotation $A_n$ of the screw $W_n$, where $R_{max\ n}$ fulfils:

$$R_{max\ n} <= (D_n/2)$$

• at least one feed zone,
• one or more devolatilisation zones comprising in each case at least one devolatilisation opening which is suitable for discharge of volatile constituents from an elastomer-containing medium from the extruder,
• at least one discharge zone,

where the extruder has screw elements SE as treatment elements, which are configured so that at least the following condition is met:

S1) the free spacing $A_{SE}$ between the profiles of the screw elements of two screws which can be driven so as to rotate and are each arranged concentrically in adjacent barrel holes $B_n$ and $B_{n+1}$ which pass through opposite one another, is, in cross-sectional profile with rotation of the screws by 360° in the same direction,

> i) from 0.001 to 0.2 $A_D$, where $A_D$ is the spacing of the axes of rotation of the adjacent two screws which can be driven so as to rotate
> ii) and has an absolute minimum $A_{minSE}$ and an absolute maximum $A_{maxSE}$ where $A_{maxSE} \geq 1.5\ A_{minSE}$, preferably $\geq 5.0\ A_{minSE}$ and particularly preferably $\geq 10.0\ A_{minSE}$.

2. Devolatilisation apparatus according to Claim 1, **characterized in that** the screw elements SE also satisfy the following condition:

S2) the cross-sectional profile of the screw elements has at least one absolute maximum $R_{max\ n}$ based on the radial dimension of the profile curve, for which:

$0.420\ D_n < R_{max\ n} < 0.496\ D_n$, preferably $0.420\ D_n < R_{max\ n} < 0.490\ D_n$, preferably $0.430\ D_n < R_{max\ n} < 0.485\ D_n$, particularly preferably $0.440\ D_n < R_{max\ n} < 0.482\ D_n$ and very particularly preferably $0.450\ D_n < R_{max\ n} < 0.480\ D_n$.

3. Devolatilisation apparatus according to Claim 1 or 2, **characterized in that** twin-screw extruders, planetary gear extruders or ring extruders, preferably twin-screw extruders or ring extruders, very particularly preferably twin-screw extruders, are used as extruders.

4. Devolatilisation apparatus according to any of Claims 1 to 3, **characterized in that** the last devolatilisation zone of the extruder in the transport direction of the extruder (14), preferably all devolatilisation zones, is/are equipped with screw elements SE.

5. Devolatilisation apparatus according to any of Claims 1 to 4, **characterized in that** the devolatilisation openings (16) and the devolatilisation domes (17) are configured so that they effectively prevent or reduce exit of elastomer-containing medium and in particular have single-screw or multiscrew, in particular twin-screw, stopping screws which are mounted at the devolatilisation openings and are operated so as to convey into the extruder or have rollers or belts which are arranged on the inside of the devolatilisation openings in order to push elastomer-containing medium or product back into the extruder.

6. Devolatilisation apparatus according to any of Claims 1 to 5, **characterized in that** the screw elements SE are unsymmetrical or symmetrical.

7. Process for removing volatile compounds from an elastomer-containing medium (EM) which contains at least one elastomer and at least one volatile compound, which process comprises at least the following step:

introduction of the elastomer-containing medium (EM) into a devolatilisation apparatus according to any of Claims 1 to 6 which is operated so that volatile compounds are given off from the elastomer-containing medium (EM) through the devolatilisation openings of the devolatilisation unit and the elastomer-containing medium (EM) is in this way depleted in volatile compounds and the polymer is isolated as product P from the elastomer-containing medium on discharge from the devolatilisation apparatus and the product P then has a lower proportion of volatile compounds than the elastomer-containing medium (EM) introduced into the devolatilisation apparatus and preferably has a total content of volatile compounds of 1% by weight or less, preferably 0.5% by weight or less, particularly preferably 0.1% by weight or less, based on the mass of the elastomer.

8. Process according to Claim 7, **characterized in that** the elastomer-containing medium (EM) contains at least one natural or synthetic elastomer which preferably has a weight average molecular weight of more than 2000 g/mol, particularly preferably more than 5000 g/mol and very particularly preferably from 20 000 to 2 000 000 g/mol.

9. Process according to Claim 7 or 8, **characterized in that** the elastomer-containing medium (EM) contains styrene-butadiene rubbers such as solution styrene-butadiene rubber (SSBR) or emulsion styrene-butadiene rubber (ESBR), natural rubbers (NR), butadiene rubbers (BR) such as neodymium butadiene rubber (NdBR), lithium butadiene rubber (LiBR) and cobalt butadiene rubber (CoBR), isoprene rubbers (IR), ethylene-propylene-diene rubbers such as ethylene-propylene-diene (M class) rubbers (EPDM), ethylene-propylene rubbers, nitrile rubbers such as acrylonitrile-butadiene rubbers (NBR), hydrogenated nitrile rubbers (HNBR), butyl rubbers such as isobutene-isoprene rubber (IIR), halobutyl rubbers such as chlorobutyl rubber (CIIR) and bromobutyl rubber (BIIR) or ionomers prepared from halobutyl rubbers by reaction with amines or phosphines, preferably those which can be obtained by reaction of BIIR with tertiary phosphines, chloroprene rubbers (CR), ethylene-vinyl acetate rubbers (EVA and EVM), polyurethane rubbers, gutta percha, fluoro rubbers, silicone rubbers, sulphide rubbers, chlorosufonyl-polyethylene rubbers and also any mixtures of the abovementioned elastomers.

10. Process according to any of Claims 7 to 9, **characterized in that** the elastomer-containing medium (EM) contains butyl rubber and/or halogenated butyl rubbers.

11. Process according to any of Claims 7 to 10, **characterized in that** the elastomer-containing medium (EM) is in the form of suspensions, pastes, melts, solutions, particulate solid compositions or mixed forms of the abovementioned forms.

12. Process according to any of Claims 7 to 11, **characterized in that** the elastomer-containing medium (EM) contains from 3 to 98% by weight of an elastomer and from 2 to 97% by weight of volatile compounds, in particular an organic solvent or an organic solvent and water, where the abovementioned components make up up to 90-100% by weight, preferably from 95 to 100% by weight, of the total mass of the elastomer-containing medium (EM) .

13. Process according to any of Claims 7 to 12, **characterized in that** the pressure in the devolatilisation openings (16) and devolatilisation domes (17) is in the range from 1 hPa to 2000 hPa.

14. Process according to any of Claims 7 to 13, **characterized in that** stripping agents are introduced into the extruder of the devolatilisation apparatus or the preextruder or prekneader.

15. Use of a devolatilisation apparatus according to any of Claims 1 to 6 which has, as treatment elements, screw elements SE which are configured so that at least the following condition is met:
S1) the free spacing $A_{SE}$ between the profiles of the screw elements of two screws which can be driven so as to rotate and are each arranged concentrically in adjacent barrel holes $B_n$ and $B_{n+1}$ which pass through opposite one another, is, in cross-sectional profile with rotation of the screws by 360° in the same direction,

    i) from 0.001 to 0.2 $A_D$, where $A_D$ is the spacing of the axes of rotation of the adjacent two screws which can be driven so as to rotate
    ii) and has an absolute minimum $A_{minSE}$ and an absolute maximum $A_{maxSE}$ such that $A_{maxSE} \geq 1.5\ A_{minSE}$, preferably $\geq 5.0\ A_{minSE}$ and particularly preferably $\geq 10.0\ A_{minSE}$,
    for devolatilising elastomer-containing media.

**Revendications**

1. Dispositif de dégazage comprenant au moins une extrudeuse, qui comprend au moins :

    - un boîtier et n alésages de boîtier $B_n$ ayant les diamètres d'alésage $D_n$ associés, n étant un nombre entier de 2 à 16, de manière particulièrement préférée de 2 à 12, de manière tout particulièrement préférée de 2 à 8, et de manière encore davantage préférée de 2, et les alésages de boîtier pénétrant dans des directions opposées et étant de préférence agencés en parallèle,
    - n arbres $W_n$ entraînables par rotation, de préférence dans le même sens, qui sont chacun agencés concentriquement dans un des alésages de boîtier $B_n$, présentent chacun un axe de rotation $A_n$ et sont chacun équipés d'au moins un élément de manipulation, dont le profil de section transversale présente dans la direction périphérique :
    - m maxima relatifs $R^m_{max\ n}$ au regard de la dimension radiale du profil de section transversale de l'élément de manipulation par rapport à l'axe de rotation $A_n$ de l'arbre $W_n$, m étant un nombre entier de 1 à 16, de préférence de 1 à 8, de manière particulièrement préférée de 1, 2, 3 ou 4, de manière tout particulièrement préférée de 1, 2 ou 3, et de manière encore davantage préférée de 2 ou 3, au moins un maximum relatif $R^m_{max\ n}$ étant en outre un maximum absolu de la dimension radiale $R_{max\ n}$ au regard de la dimension radiale du profil de section transversale de l'élément de manipulation par rapport à l'axe de rotation $A_n$ de l'arbre $W_n$, avec pour $R_{max\ n}$ :

$$R_{max\ n} \leq (D_n/2)$$

- au moins une zone d'alimentation,
- une ou plusieurs zones de dégazage comprenant chacune au moins une ouverture de dégazage, qui est appropriée pour le déchargement de constituants volatils d'un milieu contenant un élastomère à partir de l'extrudeuse,
- au moins une zone de déchargement,
l'extrudeuse comprenant en tant qu'éléments de manipulation des éléments vis SE, qui sont configurés de telle sorte qu'au moins la condition suivante soit satisfaite :
S1) la distance libre $A_{SE}$ entre les profils des éléments vis de deux arbres entraînables par rotation, qui sont chacun agencés concentriquement dans des alésages de boîtier voisins pénétrant en direction opposée $B_n$ et $B_{n+1}$, est dans le profil de section transversale lors d'une rotation dans le même sens des arbres de 360°

i) de 0,001 à 0,2 $A_D$, $A_D$ étant la distance entre les axes de rotation des deux arbres entraînables par rotation voisins,
ii) et présente au moins un minimum absolu $A_{minSE}$ et un maximum absolu $A_{maxSE}$, avec $A_{maxSE} \geq 1,5$ $A_{minSE}$, de préférence $\geq 5,0$ $A_{minSE}$, et de manière particulièrement préférée $\geq 10,0$ $A_{minSE}$.

2. Dispositif de dégazage selon la revendication 1, **caractérisé en ce que** les éléments vis SE satisfont en outre la condition suivante :
S2) le profil de section transversale des éléments vis présente au regard de la dimension radiale de la courbe de profil au moins un maximum absolu $R_{max\,n}$, pour lequel :
0,420 $D_n$ < $R_{max\,n}$ < 0,496 $D_n$, de préférence 0,420 $D_n$ < $R_{max\,n}$ < 0,490 $D_n$, de préférence 0,430 $D_n$ < $R_{max\,n}$ < 0,485 $D_n$, de manière particulièrement préférée 0,440 $D_n$ < $R_{max\,n}$ < 0,482 $D_n$, et de manière tout particulièrement préférée 0,450 $D_n$ < $R_{max\,n}$ < 0,480 $D_n$.

3. Dispositif de dégazage selon la revendication 1 ou 2, **caractérisé en ce que** des extrudeuses à deux arbres, des extrudeuses à cylindre planétaire ou des extrudeuses à anneau, de préférence des extrudeuses à deux arbres ou des extrudeuses à anneau, de manière tout particulièrement préférée des extrudeuses à deux arbres, sont utilisées en tant qu'extrudeuse.

4. Dispositif de dégazage selon l'une quelconque des revendications 1 à 3, **caractérisé en ce que** la dernière zone de dégazage de l'extrudeuse dans la direction de transport de l'extrudeuse (14), de préférence toutes les zones de dégazage, sont équipées d'éléments vis SE.

5. Dispositif de dégazage selon l'une quelconque des revendications 1 à 4, **caractérisé en ce que** les ouvertures de dégazage (6) et les dômes de dégazage (17) sont configurés de manière à empêcher ou réduire efficacement une sortie de milieu contenant un élastomère, et comprennent notamment des vis de remplissage à un ou plusieurs arbres, notamment à deux arbres, qui sont montées sur les ouvertures de dégazage et exploitées par transport dans l'extrudeuse, ou des rouleaux ou des courroies, qui sont agencées sur le côté intérieur des ouvertures de dégazage, afin de repousser le milieu ou le produit contenant un élastomère dans l'extrudeuse.

6. Dispositif de dégazage selon l'une quelconque des revendications 1 à 5, **caractérisé en ce que** les éléments vis SE sont asymétriques ou symétriques.

7. Procédé d'élimination de composés volatils d'un milieu contenant un élastomère (EM), qui contient au moins un élastomère et au moins un composé volatil, qui comprend au moins l'étape suivante :
l'introduction du milieu contenant un élastomère (EM) dans un dispositif de dégazage selon l'une quelconque des revendications 1 à 6, celui-ci étant exploité de telle sorte que des composés volatils s'échappent du milieu contenant un élastomère (EM) par les ouvertures de dégazage de l'unité de dégazage, et que le milieu contenant un élastomère (EM) soit ainsi appauvri en composés volatils, et que le polymère soit obtenu à partir du milieu contenant un élastomère en tant que produit P à la sortie du dispositif de dégazage, qui présente alors une proportion plus faible de composés volatils que le milieu contenant un élastomère (EM) introduit dans le dispositif de dégazage, et présente de préférence une teneur totale en composés volatils de 1 % en poids ou moins, de préférence de 0,5 % en poids ou moins, de manière particulièrement préférée de 0,1 % en poids ou moins, par rapport à la masse de l'élastomère.

8. Procédé selon la revendication 7, **caractérisé en ce que** le milieu contenant un élastomère (EM) contient au moins un élastomère naturel ou synthétique, qui présente de préférence un poids moléculaire moyen en poids de plus de 2 000 g/mol, de manière particulièrement préférée de plus de 5 000 g/mol et de manière tout particulièrement préférée de 20 000 à 2 000 000 g/mol.

**9.** Procédé selon la revendication 7 ou 8, **caractérisé en ce que** le milieu contenant un élastomère (EM) contient des caoutchoucs de styrène-butadiène, tels que par exemple un caoutchouc de styrène-butadiène en solution (SSBR) ou un caoutchouc de styrène-butadiène en émulsion (ESBR), des caoutchoucs naturels (NR), des caoutchoucs de butadiène (BR), tels que par exemple le caoutchouc de néodyme-butadiène (NdBR), le caoutchouc de lithium-butadiène (LiBr) et le caoutchouc de cobalt-butadiène (CoBR), des caoutchoucs d'isoprène (IR), des caoutchoucs d'éthylène-propylène-diène, tels que par exemple les caoutchoucs d'éthylène-propylène-diène (classe M) (EPDM), des caoutchoucs d'éthylène-propylène, des caoutchoucs de nitrile, tels que par exemple les caoutchoucs d'acrylonitrile-butadiène (NBR), des caoutchoucs de nitrile hydrogénés (HNBR), des caoutchoucs de butyle, tels que par exemple le caoutchouc d'isobutène-isoprène (IIR), des caoutchoucs d'halobutyle, tels que par exemple le caoutchouc de chlorobutyle (CIIR) et le caoutchouc de bromobutyle (BIIR), ou des ionomères fabriqués à partir de caoutchoucs d'halobutyle par réaction avec des amines ou des phosphines, de préférence ceux pouvant être obtenus par réaction de BIIR avec des phosphines tertiaires, des caoutchoucs de chloroprène (CR), des caoutchoucs d'éthylène-acétate de vinyle (EVA et EVM), des caoutchoucs de polyuréthane, de la gutta-percha, des caoutchoucs fluorés, des caoutchoucs de silicone, des caoutchoucs de sulfure, des caoutchoucs de chlorosulfonyl-polyéthylène, ainsi que des mélanges quelconques des élastomères susmentionnés.

**10.** Procédé selon l'une quelconque des revendications 7 à 9, **caractérisé en ce que** le milieu contenant un élastomère (EM) contient du caoutchouc de butyle et/ou des caoutchoucs de butyle halogénés.

**11.** Procédé selon l'une quelconque des revendications 7 à 10, **caractérisé en ce que** le milieu contenant un élastomère (EM) se présente sous la forme de suspensions, de pâtes, de masses fondues, de solutions, de masses solides en morceaux ou de formes mixtes des formes susmentionnées.

**12.** Procédé selon l'une quelconque des revendications 7 à 11, **caractérisé en ce que** le milieu contenant un élastomère (EM) contient 3 à 98 % en poids d'un élastomère et 2 à 97 % en poids de composés volatils, notamment un solvant organique ou un solvant organique et de l'eau, les composants susmentionnés représentant jusqu'à 90 à 100 % en poids, de préférence 95 à 100 % en poids, de la masse totale du milieu contenant un élastomère (EM) .

**13.** Procédé selon l'une quelconque des revendications 7 à 12, **caractérisé en ce que** la pression dans les ouvertures de dégazage (16) et les dômes de dégazage (17) est comprise entre 1 hPa et 2 000 hPa.

**14.** Procédé selon l'une quelconque des revendications 7 à 13, **caractérisé en ce que** des agents d'extraction sont introduits dans l'extrudeuse du dispositif de dégazage ou la pré-extrudeuse ou le pré-malaxeur.

**15.** Utilisation d'un dispositif de dégazage selon l'une quelconque des revendications 1 à 6, qui comprend en tant qu'éléments de manipulation des éléments vis SE, qui sont configurés de telle sorte qu'au moins la condition suivante soit satisfaite :
S1) la distance libre $A_{SE}$ entre les profils des éléments vis de deux arbres entraînables par rotation, qui sont chacun agencés concentriquement dans des alésages de boîtier voisins pénétrant en direction opposée $B_n$ et $B_{n+1}$, est dans le profil de section transversale lors d'une rotation dans le même sens des arbres de 360°

i) de 0,001 à 0,2 $A_D$, $A_D$ étant la distance entre les axes de rotation des deux arbres entraînables par rotation voisins,
ii) et présente au moins un minimum absolu $A_{minSE}$ et un maximum absolu $A_{maxSE}$, avec $A_{maxSE} \geq 1,5\ A_{minSE}$, de préférence $\geq 5,0\ A_{minSE}$, et de manière particulièrement préférée $\geq 10,0\ A_{minSE}$, pour le dégazage de milieux contenant un élastomère.

Fig. 1

**Fig. 2a**

0°                                        45°                                        90°

$$A_{maxSE} = A_{minSE} = 0$$

A

$$A_{maxSE} = A_{minSE} = const.$$

**Fig. 2b**

A

Fig. 2c

**Fig. 3**

A_D: Achsabstand

**Fig. 4**

A_D: Achsabstand

Fig. 7

Fig. 8

Fig. 9

Fig. 10

**Fig. 11**

**Fig. 13**

Fig. 12

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009153000 A
- DE 1180718 A
- WO 2009152968 A
- WO 2011039016 A
- EP 1617985 A1
- EP 0861717 A1
- EP 1127609 A2
- EP 1165302 A1
- WO 2010031823 A
- EP 2011054415 W
- US 4055001 A

- US 2001056176 A1
- EP 0764076 A
- JP 2003039527 A
- EP 2012069201 W
- JP 59048136 A
- US 3501807 A
- DE 3431063
- DE 623903
- EP 2011062636 W
- EP 2353839 A

**In der Beschreibung aufgeführte Nicht-Patentliteratur**

- *Monomeren, Oligomeren sowie Hilfs- und Lösungsmitteln aus polymerhaltigen Medien,* 192-212
- **KLEMENS KOHLGRÜBER.** Klemens Kohlgrüber. Twin-Screw Extruders. Hanser Verlag München, 2007

- **C.G. HAGBERG.** *Process Machinery,* Marz 2000